# EUROPEAN PATENT SPECIFICATION

(11) **EP 4 494 744 B1**
(45) Date of publication and mention of the grant of the patent: **05.08.2026**
(21) Application number: 22951766.9
(22) Date of filing: 21.10.2022
(51) Int. Cl.: B01D 53/62, B01D 53/78, B01D 53/96

(54) **CARBON DIOXIDE TRAPPING METHOD AND GAS ABSORPTION SYSTEM**
KOHLENDIOXIDABSCHEIDUNGSVERFAHREN UND GASABSORPTIONSSYSTEM
PROCÉDÉ DE PIÉGEAGE DE DIOXYDE DE CARBONE ET SYSTÈME D'ABSORPTION DE GAZ

(30) Priority: 18.07.2022 CN 202210843497; 18.07.2022 CN 202210843553; 27.09.2022 CN 202211182959
(43) Date of publication of application: 22.01.2025
(73) Proprietor: Xeca Turbo Technologies (beijing) Co., Ltd., Beijing 100012 (CN)
(72) Inventor: LV, Xijia, Beijing 102209 (CN); ZHAO, Tu, Beijing 102209 (CN); ZHUANG, Shuxian, Beijing 102209 (CN); BAI, Yakui, Beijing 102209 (CN); LIU, Yifan, Beijing 102209 (CN); CHEN, Shen, Beijing 102209 (CN); FU, Di, Beijing 102209 (CN); ZHANG, Hao, Beijing 102209 (CN); ZHANG, Junwei, Beijing 102209 (CN)
(74) Representative: Murgitroyd & Company
(86) International application number: PCT/CN2022/126781
(87) International publication number: WO 2024/016502

(56) References cited:
- EP-A1- 3 995 204
- CN-A- 107 349 759
- CN-A- 111 729 483
- CN-A- 112 933 895
- CN-A- 113 549 929
- CN-U- 212 701 238
- US-A1- 2021 095 381
- US-A1- 2022 170 166

## Description

### TECHNICAL FIELD

The present application relates to the field of carbon dioxide capture technologies, and in particular, to a method for capturing carbon dioxide and a gas absorption system.

### BACKGROUND

At present, the mainstream methods for capturing carbon dioxide (CO₂) at home and abroad mainly include a liquid amine adsorption method, a solid membrane adsorption method and the like. However, in the above methods, only CO₂ with a high concentration can be captured, and CO₂ with a wide concentration range cannot be captured, for example, CO₂ with a low concentration in air cannot be captured.

In the prior art, in order to solve the above problems, a method with an inorganic alkali such as potassium hydroxide as a liquid absorbent is adopted to capture carbon sources with a wide concentration range such as air and flue gas, an inorganic alkaline solution obtained after the capturing is converted into a carbonate solution, and an alkaline solution may be regenerated by using a method of an electrolysis.

However, during a process of an electrolysis, a concentration of carbonate is too high or too low, which results in an increase of a voltage of an electrolytic cell, thereby increasing energy consumption of a system. As for a remaining inorganic alkali, if a concentration of a remaining alkaline solution is too high, it is necessary to first consume all hydroxide in the inorganic alkali before carbonate is electrolyzed, which causes a significant power consumption; and if the concentration of the remaining alkaline solution is too low, capture efficiency of carbon dioxide gas during a capture process cannot be effectively ensured. Therefore, it is relatively difficult to control capture efficiency of carbon dioxide gas and overall energy consumption of a system for capturing carbon dioxide gas in the prior art.

Patent application document No. CN107349759A provides a combined ship-exhaust desulfurization and decarbonization apparatus including an absorption tower internally partitioned from bottom to top into a desulfurization zone, a decarbonization zone and a demister, a first membrane-electrolysis cell that regenerates the desulfurization-zone spent liquor into fresh absorbent by low-valence membrane electrolysis, a second membrane-electrolysis cell that regenerates the decarbonization-zone spent liquor into fresh CO₂-absorbent while co-producing pure CO₂ and SO₂, a desulfurization recycle pump that returns the regenerated absorbent to the tower, a dosing tank that adjusts the decarbonization-zone liquor pH by alkali addition, a decarbonization recycle pump that feeds the liquor into the tower, and a make-up pump that replenishes the desulfurization absorbent when its flow is low, the dual-loop absorption and membrane-electrolysis technologies enabling efficient removal of CO₂ and SO₂ from the exhaust, recovery of high-purity CO₂ and SO₂, recyclable absorbents, simple operation, enhanced economic benefit, energy saving and environmental protection.

Patent application document No. EP3995204A1 provides a method of scrubbing a gas, such as flue gas or exhaust gas, including carbon dioxide to deplete the gas of carbon dioxide (CO₂), the method including the steps of: - scrubbing the gas in a scrubber (210) with a first alkaline, aqueous scrubbing liquid to dissolve carbon dioxide (CO₂) as hydrogen carbonate (HCO³⁻) and/or as carbonate (CO₃²⁻) in the first alkaline, aqueous scrubbing liquid, thereby providing a first spent aqueous scrubbing liquid including hydrogen carbonate (HCO³⁻) and/or carbonate (CO₃²⁻), the first spent aqueous scrubbing liquid having a pH from about 7 to about 9; - feeding the first spent aqueous scrubbing liquid to an anode chamber of an electrolytic cell (310) including the anode chamber (313) and a cathode chamber (312) separated by a membrane (311); - regenerating the first spent aqueous scrubbing liquid in the electrolytic cell (310) by electrolysis, the electrolysis increasing the pH of the first spent aqueous scrubbing liquid in the cathode chamber (312), the electrolysis further depleting the first spent aqueous scrubbing liquid of hydrogen carbonate (HCO³⁻) and of carbonate (CO₃²⁻) in the anode chamber (313) by decreasing the pH, the regeneration further including generating gaseous hydrogen in the cathode chamber (312) and a gaseous mixture of oxygen and carbon dioxide (CO₂) in the anode chamber (313) by electrolysis; and - withdrawing regenerated alkaline, aqueous scrubbing liquid from the cathode chamber (312) and re-circulating it to the scrubber (210); where: - the gaseous hydrogen is withdrawn from the cathode chamber (312); and - the gaseous mixture of oxygen and carbon dioxide is withdrawn from the anode chamber (313).

Patent application document No. US20210095381A1 provides a carbon dioxide reduction system including: an absorption tower configured to bring a source gas containing carbon dioxide into contact with an absorption liquid composed of an aqueous solution containing at least one amine compound so that the carbon dioxide is absorbed in the absorption liquid; an electrolysis apparatus for electrolyzing the carbon dioxide absorbed in the absorption liquid in the absorption tower; and a circulation line for circulating the absorption liquid between the absorption tower and the electrolysis apparatus.

Patent application document No. CN111729483A provides a CO₂ capture system and method, the system including a pre-scrubbing tower, a scrubbing liquor recovery unit, an absorption tower and a regeneration tower, the scrubbing liquor recovery unit being in communication with the pre-scrubbing tower and consisting of an interconnected reaction tank and separation tank each also in communication with the pre-scrubbing tower, where the incorporated scrubbing liquor recovery unit treats the spent liquor to restore its alkalinity for cyclic reuse, thereby reducing liquor discharge and enhancing resource utilization, and during recovery calcium-based salts are produced that can be reclaimed as desulfurizing agents, achieving dual resource recycling within the system, boosting resource efficiency, lowering system energy consumption and cutting waste liquor treatment costs.

### SUMMARY

The main purposes of the present application are to provide a method for capturing carbon dioxide and a gas absorption system, to solve problems in that capture efficiency of carbon dioxide gas and overall energy consumption of a system for capturing carbon dioxide gas are relatively difficult to control in the prior art.

To achieve the above purposes, according to an aspect of the present application, a method for capturing carbon dioxide is provided, including: spraying an alkaline solution through a first spray structure, so that the alkaline solution flowing out through the first spray structure chemically reacts with carbon dioxide gas in gas to absorb the carbon dioxide gas; temporarily storing a solution, obtained after the alkaline solution chemically reacts with the carbon dioxide gas, in a first temporary storage structure, and making the solution stored temporarily in the first temporary storage structure flow out through the first spray structure; detecting a concentration of hydroxide and a concentration of carbonate of the solution in the first temporary storage structure in real time, and supplementing one of an alkaline solution and water into the first temporary storage structure according to the concentration of the hydroxide and the concentration of the carbonate; and during a process of detecting the concentration of the hydroxide and the concentration of the carbonate of the solution in the first temporary storage structure in real time, in a case that the concentration of the hydroxide is detected to be less than or equal to m and the concentration of the carbonate is detected to be n, controlling a first pump body disposed on a first pipeline for pumping the solution entering the first temporary storage structure into the first spray structure to stop running, so that the solution stored temporarily in the first temporary storage structure enters an electrolysis device located downstream of the first temporary storage structure for an electrolysis.

Further, a method for making the solution stored temporarily in the first temporary storage structure flow out through the first spray structure includes: starting the first pump body, to pump the solution stored temporarily in the first temporary storage structure into the first spray structure via a pipeline through the first pump body.

Further, a method for supplementing one of an alkaline solution and water into the first temporary storage structure according to the concentration of the hydroxide and the concentration of the carbonate includes: in a case that the concentration of the hydroxide is detected to be less than m and the concentration of the carbonate is detected to be less than n, supplementing the alkaline solution into the first temporary storage structure; and in a case that the concentration of the hydroxide is detected to be less than or equal to m and the concentration of the carbonate is detected to be greater than n, supplementing the water into the first temporary storage structure.

Further, a method for detecting a concentration of hydroxide of the solution in the first temporary storage structure in real time includes: feeding the solution into a potentiometric titrator, dripping a standard acid with calibrated H+ concentration into the solution, and during a process of titration, continuously stirring the solution added with the standard acid and recording a first-order differential curve of solution potential with respect to a volume of the standard acid added into the solution, until the first-order differential curve of the solution potential reaches a first peak value, and calculating the concentration of the hydroxide of the solution by using the volume of the standard acid consumed at this time.

Further, a method for detecting a concentration of carbonate of the solution in the first temporary storage structure in real time includes: feeding the solution into a potentiometric titrator, dripping a standard acid with calibrated H+ concentration into the solution, and during a process of titration, continuously stirring the solution added with the standard acid and recording a first-order differential curve of solution potential with respect to a volume of the standard acid added into the solution, until the first-order differential curve of the solution potential reaches a first peak value, recording the volume of the standard acid consumed at this time as V1; continuing to drip the standard acid with the calibrated H+ concentration into the solution, and during a process of the titration, continuing to stir the solution added with the standard acid and recording a first-order differential curve of solution potential with respect to a volume of the standard acid added into the solution, until the first-order differential curve of the solution potential reaches a second peak value, recording the volume of the standard acid consumed at this time as V2; and calculating the concentration of the carbonate of the solution by using a difference between V2 and V1.

Further, a value of m is greater than or equal to 0.1 mol/L and less than or equal to 5 mol/L; and/ or a value of n is greater than or equal to 1 mol/L and less than or equal to 6 mol/L.

Further, a value of m is greater than or equal to 0.3 mol/L and less than or equal to 2 mol/L; and/or a value of n is greater than or equal to 2 mol/L and less than or equal to 5.5 mol/L.

Further, during a process where the solution stored temporarily in the first temporary storage structure enters the electrolysis device located downstream of the first temporary storage structure for the electrolysis, the method for capturing the carbon dioxide further includes: regulating electric charge applied to the electrolysis device, to control a molar yield ratio of carbon dioxide gas to hydrogen in the electrolysis device over unit time and/or a yield of carbon dioxide gas and hydrogen in the electrolysis device over unit time.

Further, a method for regulating electric charge applied to the electrolysis device includes: obtaining a preset value Q of the electric charge applied to the electrolysis device in a case that the molar yield ratio of the carbon dioxide gas to the hydrogen is 1, and increasing nQ on a basis of the preset value Q of the electric charge, to adjust the molar yield ratio of the carbon dioxide gas to the hydrogen, where n is equal to 1, 2, 3, ... , N (N≤ n).

Further, during a process for regulating a molar yield ratio of carbon dioxide gas to hydrogen, the method for capturing the carbon dioxide further includes: detecting a content of an electrolyte in the electrolysis device in real time, and in a case that the content of the electrolyte is less than a preset value, adding an electrolyte to the electrolysis device; and the electrolyte is one of alkali metal sulfate, alkali metal nitrate and alkali metal phosphate.

Further, a method for temporarily storing a solution, obtained after the alkaline solution chemically reacts with the carbon dioxide gas, in a first temporary storage structure includes: providing at least two first temporary storage structures for switching operation, and selectively and temporarily storing the solution, obtained after the alkaline solution chemically reacts with the carbon dioxide gas, in each of the at least two first temporary storage structures; and in a case that a concentration of carbonate in one first temporary storage structure reaches a preset concentration value, deactivating the one first temporary storage structure, and enabling a remaining first temporary storage structure.

According to another aspect of the present application, a gas absorption system is provided, the gas absorption system is configured to absorb carbon dioxide gas in environment and uses the above method for capturing the carbon dioxide. The gas absorption system includes: a housing provided with an intake port and an exhaust port, the intake port being in communication with the exhaust port, where the exhaust port is located above the intake port; or in a horizontal direction, the intake port and the exhaust port are disposed opposite to each other; a gas pretreatment device disposed inside the housing and located at the intake port for filtering impurities in gas entering the intake port; and a gas absorption assembly disposed inside the housing and located downstream of the gas pretreatment device, the gas absorption assembly including a first liquid supply device and a first spray structure, the first liquid supply device being in communication with the first spray structure to provide an alkaline solution, and the alkaline solution flowing out through the first spray structure chemically reacting with carbon dioxide gas in the gas to absorb the carbon dioxide gas, where the gas absorption assembly further includes: a first filler disposed opposite to the exhaust port, the first filler being located below the first spray structure; a first water collector located above the first spray structure; a first temporary storage structure located below the first filler for temporarily storing a solution obtained after the alkaline solution chemically reacts with the carbon dioxide gas; a first pipeline, an end of the first pipeline being in communication with the first temporary storage structure, and another end of the first pipeline being in communication with the first spray structure; a first pump body disposed on the first pipeline for pumping the solution entering the first temporary storage structure into the first spray structure; a gas delivery device disposed at at least one of the exhaust port and the intake port; a first detection device disposed inside the first temporary storage structure for detecting a concentration of carbonate of a solution; and in a case that a detection value of the first detection device reaches a first preset concentration value, the gas delivery device is configured to be controlled to stop running; and a second detection device disposed inside the first temporary storage structure for detecting a concentration of hydroxide of a solution; and in a case that a detection value of the second detection device is less than a second preset concentration value, the first pump body is configured to be controlled to start, where the gas absorption system further includes an electrolysis device, the electrolysis device is located downstream of the first temporary storage structure, and the electrolysis device is configured to electrolyze a carbonic acid solution discharged through the first temporary storage structure, so that potassium hydroxide and hydrogen are generated at a cathode of the electrolysis device, and gas obtained by mixing oxygen and carbon dioxide is generated at an anode of the electrolysis device; and the potassium hydroxide is used for absorbing carbon dioxide of the gas absorption system.

Further, the gas pretreatment device includes: a second filler disposed opposite to the intake port; a second liquid supply device; and a second spray structure located above the second filler, the second liquid supply device being in communication with the second spray structure.

Further, the gas pretreatment device further includes: a second temporary storage structure located below the second filler for temporarily storing liquid flowing out through the second filler; a second pipeline, an end of the second pipeline being in communication with the second spray structure, and another end of the second pipeline being in communication with the second temporary storage structure; and a second pump body disposed on the second pipeline for pumping the liquid entering the second temporary storage structure into the second spray structure.

Further, the second temporary storage structure includes: a first temporary storage body; a first baffle plate disposed inside the first temporary storage body for dividing an inner cavity of the first temporary storage body into a first sub-accommodating cavity and a second sub-accommodating cavity, the first sub-accommodating chamber being located below the second filler, and the second sub-accommodating cavity being in communication with the second pipeline, where the first baffle plate is provided with an overflow hole, and the first sub-accommodating cavity is in communication with the second sub-accommodating cavity through the overflow hole; or an overflow portion is disposed between the first baffle plate and the first temporary storage body, and the first sub-accommodating cavity is in communication with the second sub-accommodating cavity through the overflow portion.

Further, the housing is provided with an accommodating cavity, the intake port is in communication with the exhaust port through the accommodating cavity, and the gas absorption assembly is located inside the accommodation cavity, where there is one intake port , and there is one gas pretreatment device; or there are a plurality of intake ports, the plurality of intake ports are disposed around the accommodating cavity, there are a plurality of gas pretreatment devices, and the plurality of gas pretreatment devices and the plurality of intake ports are in a one-to-one correspondence.

The technical solutions of the present application are applied, the alkaline solution is sprayed through the first spray structure, so that the alkaline solution flowing out through the first spray structure chemically reacts with the carbon dioxide gas in the gas to absorb the carbon dioxide gas. During the above processes, the solution, obtained after the alkaline solution chemically reacts with the carbon dioxide gas, is temporarily stored in the first temporary storage structure, and the solution stored temporarily in the first temporary storage structure flows out again through the first spray structure, so as to achieve recycling of the solution. During a process of capturing carbon dioxide gas, the at least one of the concentration of the hydroxide and the concentration of the carbonate of the solution in the first temporary storage structure is detected in real time, and one of the alkaline solution and the water is supplemented into the first temporary storage structure according to the at least one of the concentration of the hydroxide and the concentration of the carbonate. The concentration of the hydroxide and the concentration of the carbonate of the solution in a final state are precisely controlled by means of alkaline solution supplement or water addition, so as to meet requirements of a process of a subsequent electrolysis, thereby reducing energy consumption of an overall system, and further solving the problems in that capture efficiency of carbon dioxide gas and overall energy consumption of a system for capturing carbon dioxide are relatively difficult to control in the prior art, and thus improving capture efficiency of a system for capturing carbon dioxide. During the process of detecting the at least one of the concentration of the hydroxide and the concentration of the carbonate of the solution in the first temporary storage structure in real time, in the case that the concentration of the hydroxide is detected to be less than or equal to m and the concentration of the carbonate is detected to be n, the first pump body or the third pump body is controlled to stop running, so that the solution stored temporarily in the first temporary storage structure enters the electrolysis device for the electrolysis.

### BRIEF DESCRIPTION OF THE DRAWINGS

The accompanying drawings, attached to the specification and forming a part of the present application, are configured to provide a further understanding of the present application, and schematic embodiments of the present application and the description thereof are configured to explain the present application and do not constitute an improper limitation on the present application. In the accompanying drawings:
FIG. 1 is a flowchart of a method for capturing carbon dioxide according to an embodiment of the present application;
FIG. 2 is a flowchart of a treatment method for hydroxide and carbonate with different concentrations of a solution in a temporary storage structure in the method for capturing the carbon dioxide in FIG. 1;
FIG. 3 is a main view of a gas absorption system according to an embodiment of the present application;
FIG. 4 is a top view of the gas absorption system in FIG. 3;
FIG. 5 is a side view of the gas absorption system in FIG. 3;
FIG. 6 is a main view of a gas absorption system according to an embodiment of the present application; and
FIG. 7 is a top view of the gas absorption system in FIG. 6.

The above accompanying drawings include the following reference numerals:
10. housing; 11. intake port; 12. exhaust port; 13. accommodating cavity; 20. gas pretreatment device; 21. second filler; 22. second spray structure; 23. second water collector; 24. second temporary storage structure; 25. second pipeline; 26. second pump body; 30. gas absorption assembly; 31. first spray structure; 32. first filler; 33. first water collector; 34. first temporary storage structure; 35. first pipeline; 36. first pump body; 40. gas delivery device; 51. first main pipeline; 52. second branch pipeline; 60. wind duct; 70. gearbox; and 80. staircase; and
121. fourth filler; 122. third spray structure, 123. fourth water collector; 124. fourth temporary storage structure; 125. third main pipeline; 126. fourth pump body; 30. gas absorption assembly; 132. third filler; 133. third water collector; 134. third temporary storage structure; 135. second main pipeline; and 136. third pump body.

### DETAILED DESCRIPTIONS OF THE EMBODIMENTS

It should be noted that the embodiments in the present application or features in the embodiments may be combined with each other without conflict. The present application is described in detail below with reference to the accompanying drawings and in conjunction with the embodiments.

It should be pointed out that, unless otherwise specified, all technical terms and scientific terms used in the present application have the same meanings as those commonly understood by ordinary technicians in the technical field to which the present application belongs.

In the present application, unless otherwise stated, directional words such as "above" and "below" are usually referred to the directions shown in the accompanying drawings, or the vertical direction, the perpendicular direction or the gravitational direction; similarly, for ease of understanding and description, directional words "left" and "right" are usually referred to the left and right shown in the accompanying drawings; and directional words "inside" and "outside" are referred to inner and outer contours of each component itself. However, the above directional words are not intended to limit the present application.

In order to solve problems in that capture efficiency of carbon dioxide gas and overall energy consumption of a system for capturing carbon dioxide gas are relatively difficult to control in the prior art, the present application provides a method for capturing carbon dioxide and a gas absorption system.

### Embodiment 1

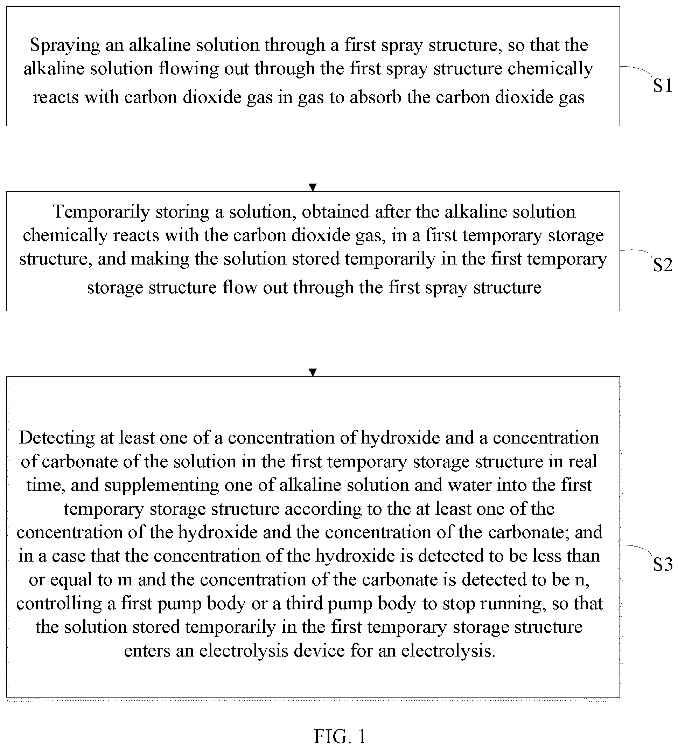

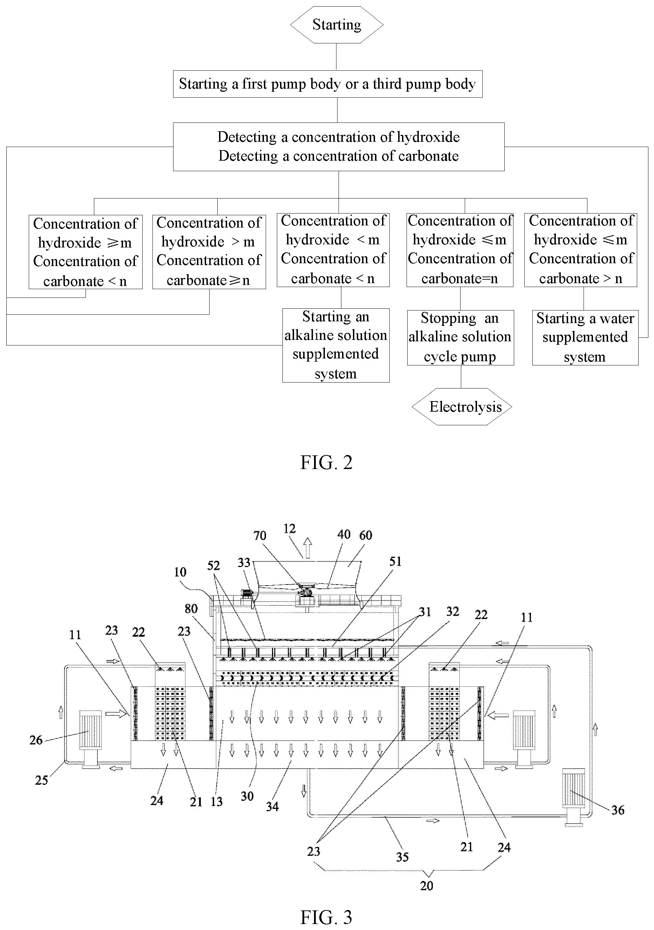

As shown in FIG. 1 and FIG. 2, a method for capturing carbon dioxide includes:
S1, spraying an alkaline solution through a first spray structure, so that the alkaline solution flowing out through the first spray structure chemically reacts with carbon dioxide gas in gas to absorb the carbon dioxide gas;
S2, temporarily storing a solution, obtained after the alkaline solution chemically reacts with the carbon dioxide gas, in a first temporary storage structure, and making the solution stored temporarily in the first temporary storage structure flow out through the first spray structure; and
S3, detecting at least one of a concentration of hydroxide and a concentration of carbonate of the solution in the first temporary storage structure in real time, and supplementing one of an alkaline solution and water into the first temporary storage structure according to the at least one of the concentration of the hydroxide and the concentration of the carbonate; and in a case that the concentration of the hydroxide is detected to be less than or equal to m and the concentration of the carbonate is detected to be n, controlling a first pump body or a third pump body to stop running, so that the solution stored temporarily in the first temporary storage structure enters an electrolysis device for an electrolysis.

The technical solutions of this embodiment are applied, the alkaline solution is sprayed through the first spray structure, so that the alkaline solution flowing out through the first spray structure chemically reacts with the carbon dioxide gas in the gas to absorb the carbon dioxide gas. During the above processes, the solution, obtained after the alkaline solution chemically reacts with the carbon dioxide gas, is temporarily stored in the first temporary storage structure, and the solution stored temporarily in the first temporary storage structure flows out again through the first spray structure, so as to achieve recycling of the solution. During a process of capturing carbon dioxide gas, the at least one of the concentration of the hydroxide and the concentration of the carbonate of the solution in the first temporary storage structure is detected in real time, and one of the alkaline solution and the water is supplemented into the first temporary storage structure according to at least one of the concentration of the hydroxide and the concentration of the carbonate. The concentration of the hydroxide and the concentration of the carbonate of the solution in a final state are precisely controlled by means of alkaline solution supplement or water addition, so as to meet requirements of a process of a subsequent electrolysis, thereby reducing energy consumption of an overall system, and further solving the problems in that capture efficiency of carbon dioxide gas and overall energy consumption of a system for capturing carbon dioxide are relatively difficult to control in the prior art, and thus improving capture efficiency of a system for capturing carbon dioxide. During the process of detecting the at least one of the concentration of the hydroxide and the concentration of the carbonate of the solution in the first temporary storage structure in real time, in the case that the concentration of the hydroxide is detected to be less than or equal to m and the concentration of the carbonate is detected to be n, the first pump body or the third pump body is controlled to stop running, so that the solution stored temporarily in the first temporary storage structure enters the electrolysis device for the electrolysis.

In this embodiment, a method for making the solution stored temporarily in the first temporary storage structure flow out through the first spray structure includes:
starting the first pump body or the third pump body, to pump the solution stored temporarily in the first temporary storage structure into the first spray structure via a pipeline through the first pump body or the third pump body.

Specifically, during a process of capturing carbon dioxide gas by a system for capturing carbon dioxide, the solution stored temporarily in the first temporary storage structure is pumped into the first spray structure via the pipeline through the first pump body or the third pump body, so as to reuse the above solution, thereby achieving the recycling of the solution, and thus avoiding waste of resource. The solution is pumped into the first spray structure through the first pump body or the third pump body, so as to ensure that the alkaline solution can be sprayed through the first spray structure to react with CO₂, thereby improving spray reliability of the first spray structure, and thus improving operational reliability of a system for capturing carbon dioxide.

In this embodiment, a method for supplementing one of an alkaline solution and water into the first temporary storage structure according to the at least one of the concentration of the hydroxide and the concentration of the carbonate includes:
in a case that the concentration of the hydroxide is detected to be less than m and the concentration of the carbonate is detected to be less than n, supplementing the alkaline solution into the first temporary storage structure; and
in a case that the concentration of the hydroxide is detected to be less than or equal to m and the concentration of the carbonate is detected to be greater than n, supplementing the water into the first temporary storage structure.

Specifically, an initial alkaline solution is placed in the first temporary storage structure located at a bottom of a system for capturing carbon dioxide, the first pump body or the third pump body starts to capture the carbon dioxide gas, and the concentration of the hydroxide and the concentration of the carbonate are detected in real time. In the case that the concentration of the hydroxide of the solution in the first temporary storage structure is greater than or equal to m and the concentration of the carbonate of the solution in the first temporary storage structure is less than n, or in the case that the concentration of the hydroxide of the solution in the first temporary storage structure is greater than m and the concentration of the carbonate of the solution in the first temporary storage structure is greater than or equal to n, the first pump body or the third pump body operates continuously, and no related measures are taken; in the case that the concentration of the hydroxide of the solution in the first temporary storage structure is less than m and the concentration of the carbonate of the solution in the first temporary storage structure is less than n, an alkaline solution supplemented device starts and the alkaline solution is supplemented into the first temporary storage structure, and the concentration of the hydroxide and the concentration of the carbonate in the first temporary storage structure continue to be detected; and in the case that the concentration of the hydroxide of the solution in the first temporary storage structure is less than or equal to m and the concentration of the carbonate of the solution in the first temporary storage structure is greater than n, a water supplemented system starts and the water is supplemented into the first temporary storage structure, and the concentration of the hydroxide and the concentration of the carbonate in the first temporary storage structure continue to be detected.

Optionally, a method for detecting a concentration of hydroxide of the solution in the first temporary storage structure in real time includes:
feeding the solution into a potentiometric titrator, dripping a standard acid with calibrated H+ concentration into the solution, and during a process of titration, continuously stirring the solution added with the standard acid and recording a first-order differential curve of solution potential with respect to a volume of the standard acid added into the solution, until the first-order differential curve of the solution potential reaches a first peak value, and calculating the concentration of the hydroxide of the solution by using the volume of the standard acid consumed at this time.

In this embodiment, a calibrated HCl solution with an actual concentration of 0.2404 mol/L is used as a titrant, and the calibrated HCl solution is slowly dripped into the solution, until a pH value of the solution is below 2, changes in an added volume of the standard acid and a pH value of the solution are recorded, and the recorded added volume of the standard acid and the recorded pH value are plotted as a pH-V curve, a first-order numerical differential curve of ΔpH/ΔV-V is calculated and then is plotted according to the recorded curve, a maximum value of the above first-order numerical differentiation is taken as an equivalence point, a titration volume at the equivalence point is obtained through the first-order numerical differentiation, the corresponding equivalence point is the EP1 shown in a pH-V change chart of the volume of the standard acid, and the concentration of the OH⁻ of the solution is calculated by using the volume at the equivalence point and a concentration at the equivalence point. The titration takes about 10 minutes from start to finish.

In other embodiments not shown in the accompanying drawings, determination of alkalinity of a solution in neutral leaching is adopted, a HCl solution with calibrated concentration is used, the HCl solution with a calibrated H+ concentration of 0.1107 mol/L is used as a titrant, and the HCl solution is slowly dripped into the solution, until a pH value of the solution is about 3, changes in a consumption volume of the standard acid and a pH value of the solution are recorded, and the recorded titration volume and the recorded pH value are plotted as a pH-V curve, a first-order numerical differential curve of ΔpH/ΔV-V is calculated and then is plotted according to the recorded curve, the volume of the standard acid corresponding to a maximum value of the above first-order numerical differentiation is taken as an equivalence point, a titration volume at the equivalence point is obtained through the first-order numerical differentiation, a pH value at the corresponding equivalence point is 5.02, and the concentration of the OH⁻ of the solution is calculated by using the volume at the equivalence point and a concentration at the equivalence point. The titration takes about 10 minutes from start to finish.

In other embodiments not shown in the accompanying drawings, determination of alkalinity after a post-liquid acidification process is adopted, a calibrated HCl solution with an actual concentration of 0.1107 mol/L is used as a titrant, and the calibrated HCl solution is slowly dripped into the solution, until the pH value of the solution is about 3.8, changes in a consumption volume of the standard acid and a pH value of the solution are recorded, and the recorded titration volume and the recorded pH value are plotted as a pH-V curve, a first-order numerical differential curve of ΔpH/ΔV-V is calculated and then is plotted according to the recorded curve, the volume of the standard acid corresponding to a maximum value of the above first-order numerical differentiation is taken as an equivalence point, a titration volume at the equivalence point is obtained through the first-order numerical differentiation, a pH value at the corresponding equivalence point is 4.42, and the concentration of the OH⁻ of the solution is calculated by using the volume at the equivalence point and a concentration at the equivalence point. The titration takes about 10 minutes from start to finish.

In other embodiments not shown in the accompanying drawings, a standard acid used in calibration experiments is adopted (i.e. a H+ concentration of a prepared hydrochloric acid solution is calibrated by using well-known methods), which is implemented in accordance with the National Standards GB/T601 - 2003. This method is calibrated twice, for the first calibration, a concentration of a standard alkali is calibrated first, and then a calibrated standard alkali solution with a known concentration is used to calibrate the standard acid. An embodiment of calibrating the alkali solution is to dry potassium hydrogen phthalate primary standard at 105 °C to 110 °C to a constant weight, dissolve 110 g of sodium hydroxide into 100 ml of water without carbon dioxide, place a solution, obtained after 110 g of the sodium hydroxide is dissolved into 100 ml of the water without carbon dioxide, in a closed polyethylene container until the solution is clear, take 10.8 ml of the clear solution at a top, and dilute the clear solution with water to 1000 ml to prepare a sodium hydroxide titrant. The potassium hydrogen phthalate primary standard that has been dried to the constant weight is weighed for 0.1377 g, 0.1377 g of the potassium hydrogen phthalate primary standard is added with water to 50ml - 60 ml, the potassium hydrogen phthalate primary standard added with the water is stirred until the potassium hydrogen phthalate primary standard added with the water is dissolved completely, and titrating and plotting are performed by an automatic potentiometric titrator using the same final judging principle as the above embodiments, so that a titration volume at an equivalence point is obtained through first-order numerical differentiation in the above chart, a pH value at the equivalence point is 8.81, and a concentration of the sodium hydroxide titrant is calculated accordingly. The titration takes about 5 minutes from start to finish. A hydrochloric acid titrant is calibrated by using a titrant with a standard calibrated concentration. 27 ml of hydrochloric acid is diluted with water to 1000ml to prepare the hydrochloric acid titrant. 3.0000 ml of the hydrochloric acid titrant is added into a beaker and then is added with water to 50ml to 60 ml, after the hydrochloric acid titrant added with the water is stirred for 90 seconds, the titrating and the plotting are performed by the automatic potentiometric titrator using the same final judging principle as the embodiment 1 to the embodiment 3, so that a titration volume at an equivalence point is obtained through the first-order numerical differentiation in the above chart, a pH value at the equivalence point is 7.45, and a H+ concentration of the hydrochloric acid as the standard acid is calculated by using a concentration of the sodium hydroxide titrant and an adding volume of the hydrochloric acid. The titration takes about 5 minutes from start to finish.

In this embodiment, a method for detecting a concentration of carbonate of the solution in the first temporary storage structure in real time includes:
dripping a standard acid with calibrated H+ concentration into the solution, and during a process of titration, continuously stirring the solution added with the standard acid and recording a first-order differential curve of solution potential with respect to a volume of the standard acid added into the solution, until the first-order differential curve of the solution potential reaches a first peak value, recording the volume of the standard acid consumed at this time as V1; continuing to drip the standard acid with the calibrated H+ concentration into the solution, and during a process of the titration, continuing to stir the solution added with the standard acid and recording a first-order differential curve of the solution potential with respect to a volume of the standard acid added into the solution, until the first-order differential curve of the solution potential reaches a second peak value, recording the volume of the standard acid consumed at this time as V2; and calculating the concentration of the carbonate of the solution by using a difference between V2 and V1.

Optionally, a value of m is greater than or equal to 0.1 mol/L and less than or equal to 5 mol/L; and/ or a value of n is greater than or equal to 1 mol/L and less than or equal to 6 mol/L. In this way, the above arrangement makes the value of m and value of n more flexible, so as to meet different usage requirements and working conditions.

Optionally, a value of m is greater than or equal to 0.3 mol/L and less than or equal to 2 mol/L; and/or a value of n is greater than or equal to 2 mol/L and less than or equal to 5.5 mol/L. In this way, the above arrangement makes the value of m and value of n more flexible, so as to meet different usage requirements and working conditions.

In this embodiment, the value of m is 0.1 mol/L and the value of n is 6 mol/L. The alkaline solution is sprayed through the spray structure, so that the alkaline solution flowing out through the spray structure chemically reacts with the carbon dioxide gas in the gas, and during a process for capturing carbon dioxide gas, the concentration of the hydroxide and the concentration of the carbonate of the solution in the first temporary storage structure are detected in real time. In the case that the concentration of the hydroxide of the solution in the first temporary storage structure is greater than or equal to 0.1 mol/L and the concentration of the carbonate of the solution in the first temporary storage structure is less than 6 mol/L, or in the case that the concentration of the hydroxide of the solution in the first temporary storage structure is greater than 0.1 mol/L and the concentration of the carbonate of the solution in the first temporary storage structure is greater than or equal to 6 mol/L, the first pump body or the third pump body operates continuously, and no related measures are taken; in the case that the concentration of the hydroxide of the solution in the first temporary storage structure is less than 0.1 mol/L and the concentration of the carbonate of the solution in the first temporary storage structure is less than 6 mol/L, an alkaline solution supplemented device starts and the alkaline solution is supplemented into the first temporary storage structure, and the concentration of the hydroxide and the concentration of the carbonate in the first temporary storage structure continue to be detected; and in the case that the concentration of the hydroxide of the solution in the first temporary storage structure is less than or equal to 0.1 mol/L and the concentration of the carbonate of the solution in the first temporary storage structure is greater than 6 mol/L, a water supplemented system starts and the water is supplemented into the first temporary storage structure, and the concentration of the hydroxide and the concentration of the carbonate in the first temporary storage structure continue to be detected. In the case that the concentration of the hydroxide is detected to be less than or equal to 0.1 mol/L and the concentration of the carbonate is detected to be 6 mol/L, the first pump body or the third pump body is controlled to stop running, so that the solution stored temporarily in the first temporary storage structure enters the electrolysis device for the electrolysis.

It should be noted that the value of m and the value of n are not limited thereto and may be adjusted according to working conditions and usage requirements.

It should be noted that, the unit kWh/kgCO₂ represents: an amount of electricity (kWh) consumed by an electrolysis device for every 1 kg of CO₂ produced during a process of an electrolysis.

In this embodiment, during a process where the solution stored temporarily in the first temporary storage structure enters the electrolysis device for the electrolysis, the method for capturing the carbon dioxide further includes:
regulating electric charge applied to the electrolysis device, so as to control a molar yield ratio of carbon dioxide gas to hydrogen in the electrolysis device over unit time and/or a yield of carbon dioxide gas and hydrogen in the electrolysis device over unit time.

Specifically, during a process for electrolytic regeneration of alkali, the absorbed carbon dioxide gas is released, while a high-value hydrogen is generated. The carbon dioxide gas and the hydrogen may synthesize a variety of chemicals, which provides a good solving basis for comprehensive utilization of carbon dioxide gas. However, a molar yield ratio of carbon dioxide gas to hydrogen required for synthesizing different chemicals is different, and therefore, how to control an output ratio of carbon dioxide gas and hydrogen during a process for electrolytic regeneration of inorganic alkali is also necessary. An electrolyte component is added to the electrolysis device, so as to enhance conductivity, thereby reducing energy consumption of an electrolysis. Water may also be electrolyzed after carbonate is electrolyzed completely, so as to further generate hydrogen, and therefore, the molar yield ratio of carbon dioxide gas to hydrogen in the electrolysis device over unit time may be controlled by changing the applied electric charge, so that an application scope of a system is greatly improved.

In this embodiment, a method for regulating electric charge applied to the electrolysis device includes:
obtaining a preset value Q of the electric charge applied to the electrolysis device in a case that the molar yield ratio of the carbon dioxide gas to the hydrogen is 1, and increasing nQ on a basis of the preset value Q of the electric charge, to adjust the molar yield ratio of the carbon dioxide gas to the hydrogen, where n is equal to 1, 2, 3, ... , N (N≤ n).

Specifically, taking the processing of a solution containing 1 mol of carbonate over unit time as an example, an electrolyte added to the electrolysis device is potassium sulfate, a concentration of the potassium sulfate at an anode is set to be 0.5 mol/L, and the electric charge applied to the electrolysis device is controlled, so that electric charge obtained by 1 mol of a carbonate solution is 53.6 A·h, and the molar yield ratio of the carbon dioxide gas to the hydrogen is 1: 1. On this basis, for every 53.6 A·h of additional applied electric charge, the yield of the carbon dioxide gas is 0, and the yield of the hydrogen increases by 1 mol, i.e., the molar yield ratio of the carbon dioxide gas to the hydrogen over unit time becomes 1: 2, so that the molar yield ratio of the carbon dioxide gas to the hydrogen is adjustable. In this embodiment, the electric charge applied to the electrolysis device is controlled, so that the electric charge obtained by 1 mol of the carbonate solution is 54.0 A·h, power consumption of the electrolysis device is measured to be 3.30 kWh/kgCO₂, and the molar yield ratio of the carbon dioxide gas to the hydrogen is 1: 1.01.

In this embodiment, during a process for regulating a molar yield ratio of carbon dioxide gas to hydrogen, the method for capturing the carbon dioxide further includes:
detecting a content of an electrolyte in the electrolysis device in real time, and in a case that the content of the electrolyte is less than a preset value, adding an electrolyte to the electrolysis device; and the electrolyte is one of alkali metal sulfate, alkali metal nitrate and alkali metal phosphate.

Optionally, the preset value is 0. Specifically, during the process for regulating the molar yield ratio of the carbon dioxide gas to the hydrogen, in the case that the content of the electrolyte is less than the preset value, the electrolyte is added to the anode of the electrolysis device, and the applied electric charge is changed, so that the molar yield ratio of the carbon dioxide gas to the hydrogen gas in the electrolysis device over unit time is controlled, thereby ensuring capture efficiency of carbon dioxide and greatly reducing overall energy consumption of a system, and thus facilitating controlling capture efficiency of carbon dioxide gas and overall energy consumption of a system for capturing carbon dioxide.

Optionally, the alkali metal sulfate is one of potassium sulfate and sodium sulfate.

Optionally, the alkali metal nitrate is one of potassium nitrate and sodium nitrate.

Optionally, the alkali metal phosphate is one of potassium phosphate and sodium phosphate.

Optionally, the alkaline solution is alkali metal hydroxide.

Optionally, a method for temporarily storing a solution, obtained after the alkaline solution chemically reacts with the carbon dioxide gas, in a first temporary storage structure includes:
providing at least two first temporary storage structures for switching operation, and selectively and temporarily storing the solution, obtained after the alkaline solution chemically reacts with the carbon dioxide gas, in each of the at least two first temporary storage structures, and in a case that a concentration of carbonate in one first temporary storage structure reaches a preset concentration value, deactivating the one temporary storage structure, and enabling a remaining temporary storage structure.

In this embodiment, there are two first temporary storage structures, and in the case that the concentration of the carbonate in a first first temporary storage structure reaches the preset concentration value, a second first temporary storage structure enables, so that carbon dioxide is captured by the alkaline solution in the second first temporary storage structure, a carbonate solution in the first first temporary storage structure is emptied, and then a fresh alkaline solution is supplemented into the first first temporary storage structure again, and after the concentration of the carbonate in the second first temporary storage structure reaches the preset concentration value, the first first temporary storage structure enables again, and these processes are repeated alternately in such a way.

Optionally, the alkali metal hydroxide is one of potassium oxide and sodium hydroxide.

As shown in FIG. 3 to FIG. 5, a gas absorption system is configured to absorb carbon dioxide gas in environment, the gas absorption system includes a housing 10, a gas pretreatment device 20 and a gas absorption assembly 30. The housing 10 is provided with an intake port 11 and an exhaust port 12, the intake port 11 is in communication with the exhaust port 12, and the exhaust port 12 is located above the intake port 11. The gas pretreatment device 20 is disposed inside the housing 10 and is located at the intake port 11 for filtering impurities in gas entering the intake port 11. The gas absorption assembly 30 is disposed inside the housing 10 and is located downstream of the gas pretreatment device 20, the gas absorption assembly 30 includes a first liquid supply device and a first spray structure 31, the first liquid supply device is in communication with the first spray structure 31 to provide an alkaline solution, and the alkaline solution flowing out through the first spray structure 31 chemically reacts with carbon dioxide gas in the gas to absorb the carbon dioxide gas.

The technical solutions of this embodiment are applied, the gas pretreatment device 20 is disposed inside the housing 10 and is located at the intake port 11, and the gas absorption assembly 30 is located downstream of the gas pretreatment device 20. In this way, during an operation of the gas absorption system, after air or flue gas enters the gas absorption system through the intake port 11, the air or the flue gas passes through the gas pretreatment device 20 first, and impurities in the air or the flue gas are filtered by the gas pretreatment device 20, which avoids accumulation of the above impurities in the gas absorption system, and avoids affecting efficiency of absorbing and capturing carbon dioxide gas by the gas absorption system caused by the above impurities entering the gas absorption assembly 30, so as to solve problems in that the impurities such as solid particles mixing in the air or the flue gas are easily accumulated in a system for capturing CO₂ in the prior art, and thus reducing an operation cost and a maintenance cost of the gas absorption system. Absorbing the impurities in the air or the flue gas can also improve a purity of a solution obtained after the alkaline solution chemically reacts with the carbon dioxide gas, thereby reducing a cost of a post-treatment process.

Optionally, the alkaline solution is one of sodium hydroxide, potassium hydroxide, potassium carbonate and sodium carbonate, and solutions with different concentrations may be prepared with deionized water as needed.

In this embodiment, an alkaline solution is used as an absorbent, which not only can capture CO₂ with a high concentration, but also can capture CO₂ with a low concentration, so as to realize the capturing of CO₂ with a wide concentration range.

In this embodiment, the gas absorption system is a countercurrent absorption system, i.e., an intake direction of the air or the flue gas is perpendicular to an exhaust direction of the air or the flue gas.

In this embodiment, there are a plurality of first spray structures 31, the plurality of first spray structures 31 are disposed at intervals along a flow direction of the gas in the gas absorption system, thereby increasing a quantity of the alkaline solution sprayed out through the first spray structures 31, and thus ensuring that the alkaline solution sprayed out through the first spray structures 31 can fully capture and absorb CO₂ in the air or the flue gas.

Specifically, a side wall of the housing 10 is provided with a staircase 80, and the workers may climb to a top of the housing 10 through the staircase 80 to repair the gas absorption system.

Optionally, the first spray structure 31 is a nozzle.

As shown in FIG. 3 to FIG. 5, the gas absorption assembly 30 further includes a first filler 32 and a first water collector 33. The first filler 32 is disposed opposite to the exhaust port 12, and the first filler 32 is located below the first spray structure 31. The first water collector 33 is located above the first spray structure 31. In this way, disposal of the first filler 32 provides sufficient contact surface for the CO₂ and the alkaline solution, so that the CO₂ in the air or the flue gas fully reacts with the alkaline solution, which further improves efficiency of capturing and absorbing CO₂ by the gas absorption assembly 30. The first water collector 33 is configured to recover water vapor in the housing 10 to reduce fine water droplet drift carried in the gas discharged through the exhaust port 12, which can effectively prevent a loss of liquid water caused by a phenomenon of water splashing at the exhaust port 12.

Specifically, the alkaline solution falls in a form of droplets from the first spray structure 31 into the first filler 32, and flows in a form of a liquid film in the first filler 32, and the alkaline solution falls in the form of the droplets into the first temporary storage structure 34 after passing through the first filler 32. The gas enters the gas absorption assembly 30 after the impurities carried in the air or the flue gas are removed through the gas pretreatment device 20, and the pretreated gas is in full contact with the alkaline solution in a water spraying area and the first filler 32 of the gas absorption assembly 30, so that CO₂ in the air or the flue gas chemically reacts with the alkaline solution, thereby capturing the CO₂. The captured CO₂ exists in the first temporary storage structure 34 in a form of carbonate and bicarbonate ions, and the first pump body 36 is configured to deliver the solution obtained after the reacting to a subsequent process system for processing. The first temporary storage structure 34 is provided with a first liquid supply device to supplement water and hydroxide consumed in the solution.

Optionally, the first filler 32 is a thin-film water-spraying filler.

Optionally, the first water collector 33 is a PVC water collector, and the first water collector 33 is supported by a bracket.

As shown in FIG. 3 to FIG. 5, the gas absorption assembly 30 further includes a first temporary storage structure 34, a first pipeline 35 and a first pump body 36. The first temporary storage structure 34 is located below the first filler 32 for temporarily storing the solution obtained after the alkaline solution chemically reacts with the carbon dioxide gas. An end of the first pipeline 35 is in communication with the first temporary storage structure 34, and another end of the first pipeline 35 is in communication with the first spray structure 31. The first pump body 36 is disposed on the first pipeline 35 for pumping the solution entering the first temporary storage structure 34 into the first spray structure 31. In this way, the solution obtained after the alkaline solution chemically reacts with the carbon dioxide gas is stored in the first temporary storage structure 34, which on the one hand facilitates post-treatment of the above solution, and on the other hand may achieve recycling of the solution, so as to avoid wasting of resource. The solution is pumped into the first spray structure 31 through the first pump body 36, so as to ensure that the alkaline solution can be sprayed through the first spray structure 31 to react with CO₂, thereby improving spray reliability of the first spray structure 31 and operational reliability of the gas absorption system.

In this embodiment, the first temporary storage structure 34 and the first liquid supply device are of a same structure. In an early operation of the gas absorption system, an alkaline solution is disposed in the first temporary storage structure 34, the alkaline solution is sprayed to the first filler 32 through the first spray structure 31 to react with CO₂ in the air or the flue gas, and the solution obtained after the reacting is stored temporarily in the first temporary storage structure 34, so that the solution enters the first spray structure 31 again to continue spraying, so as to achieve recycling of the alkaline solution, until a concentration of carbonate in the alkaline solution reaches a preset concentration value, CO₂ capture and CO₂ absorption are stopped at this time, and the solution in the first temporary storage structure 34 is replaced with the alkaline solution.

It should be noted that a relationship between the first temporary storage structure 34 and the first liquid supply device is not limited thereto and may be adjusted according to working conditions and usage requirements. Optionally, the first temporary storage structure 34 is in communication with the first liquid supply device, so as to provide the alkaline solution for the first spray structure 31 through the first liquid supply device, and the solution, obtained after the alkaline solution reacts with the CO₂, is stored temporarily in the first temporary storage structure 34, so that the solution enters the first spray structure 31 again to continue spraying.

Optionally, there is one first temporary storage structure 34; or there are a plurality of first temporary storage structures 34, and the plurality of first temporary storage structures 34 are selectively put into use. In this way, during an operation of the gas absorption system, a usage state (putting into use or not putting into use) of the first temporary storage structure 34 may be adjusted according to the concentration of the carbonate in the first temporary storage structure 34, so as to supplement a fresh alkaline solution into the first spray structure 31, thereby achieving rapid and efficient CO₂ capture of the gas absorption system.

Optionally, there are a plurality of first temporary storage structures 34, and the gas absorption assembly 30 further includes a first pipeline 35, a plurality of first branch pipelines and a plurality of first control valves. A first end of the first pipeline 35 is in communication with the first spray structure 31. The plurality of first branch pipelines and the plurality of first temporary storage structures 34 are in a one-to-one correspondence, an end of each of the plurality of first branch pipelines is in communication with respective first temporary storage structures 34, and another end of each of the plurality of first branch pipelines is in communication with a second end of the first pipeline 35. The plurality of first control valves and the plurality of first branch pipelines are in a one-to-one correspondence, and each of the plurality of first control valves is configured to control an on-off state of respective first branch pipelines. At any time, at least one of the plurality of first control valves is in an open state. In this way, the on-off state of the first branch pipeline is controlled by the first control valve corresponding to the first branch pipeline, so as to control a usage state of the first temporary storage structure 34 in communication with the first branch pipeline, thereby making it easier and simpler for the workers to control the usage state of the first temporary storage structure 34, and thus reducing control difficulty. Adopting the above arrangement enables the plurality of first temporary storage structures 34 to be connected in parallel, and at any time, the at least one of the plurality of temporary storage structures 34 is controlled to be put into use, so as to provide the alkaline solution for the first spray structure 31.

As shown in FIG. 3 to FIG, 5, the gas pretreatment device 20 includes a second filler 21, a second liquid supply device and a second spray structure 22. The second filler 21 is disposed opposite to the intake port 11. The second spray structure 22 is located above the second filler 21, and the second liquid supply device is in communication with the second spray structure 22. Specifically, the second spray structure 22 is configured to spray water, in a process of filtering impurities in the air or the flue gas by the gas pretreatment device 20, disposal of the second filler 21 provides sufficient contact surface for the impurities in the air or the flue gas and water, so as to ensure that the water can sink the impurities, thereby preventing the impurities from entering the gas absorption assembly 30.

Specifically, after the gas passes through the gas pretreatment device 20, a humidity of the gas may be increased, so as to reduce an evaporation rate of water in the gas absorption system, thereby reducing a loss of deionized water, and thus reducing a cost of capturing CO₂.

In this embodiment, the second liquid supply device is configured to supply tap water.

Optionally, the second spray structure 22 is a nozzle.

Optionally, the second filler 21 is a thin-film water-spraying filler.

Optionally, the second water collector 23 is a PVC water collector.

As shown in FIG. 3 to FIG. 5, the gas absorption assembly 30 further includes a first main pipeline 51 and a second branch pipeline 52. The first main pipeline 51 is connected to the first pipeline 35, there are a plurality of second branch pipelines 52, and each of the plurality of second branch pipelines 52 is connected to the first main pipeline 51. There are a plurality of first spray structures 31, and each of the plurality of second branch pipelines 52 is provided with a plurality of first spray structures 31.

As shown in FIG. 3 to FIG. 5, the gas pretreatment device 20 further includes a second water collector 23. The second water collector 23 is disposed opposite to the second filler 21. In this way, the second water collector 23 is configured to recover water vapor in the housing 10, so as to reduce fine water droplet drift carried in the gas discharged through the exhaust port 12, which can effectively prevent a loss of liquid water caused by a phenomenon of water splashing at the exhaust port 12.

Optionally, there is one second water collector 23; or, there are a plurality of second water collectors 23, at least one of the plurality of second water collectors 23 is located at a first side of the second filler 21, and at least one another of the plurality of second water collectors 23 is located at a second side of the second filler 21. In this way, adopting the above arrangement makes selection of an amount of second water collectors 23 more flexible, so as to meet different usage requirements and working conditions, thereby improving preparation flexibility of the workers. Disposal of the plurality of second water collectors 23 can improve recovery efficiency of water vapor, which further prevents a loss of liquid water caused by a phenomenon of water splashing at the exhaust port 12.

In this embodiment, there are two second water collectors 23, a second water collector 23 is located at the first side of the second filler 21, and another second water collector 23 is located at the second side of the second filler 21, so as to fully recover water vapor in the housing 10.

It should be noted that of the amount of second water collectors 23 is not limited thereto and may be adjusted according to working conditions and usage requirements. Optionally, the amount of second water collectors 23 is three, four, five and multiple.

As shown in FIG. 3 to FIG. 5, the gas pretreatment device 20 further includes a second temporary storage structure 24, a second pipeline 25 and a second pump body 26. The second temporary storage structure 24 is located below the second filler 21 for temporarily storing liquid flowing out through the second filler 21. An end of the second pipeline 25 is in communication with the second spray structure 22, and another end of the second pipeline 25 is in communication with the second temporary storage structure 24. The second pump body 26 is disposed on the second pipeline 25 for pumping the liquid entering the second temporary storage structure 24 into the second spray structure 22. In this way, water flowing out through the second filler 21 is stored in the second temporary storage structure 24, so as to achieve recycling of water, thereby avoiding waste of resource. The water is pumped into the second spray structure 22 through the second pump body 26, so as to ensure that water can be sprayed through the second spray structure 22 to sink the impurities, thereby improving spray reliability of the second spray structure 22 and operational reliability of the gas pretreatment device 20.

Optionally, the second temporary storage structure 24 includes a first temporary storage body and a first baffle plate. The first baffle plate is disposed inside the first temporary storage body for dividing an inner cavity of the first temporary storage body into a third sub-accommodating cavity and a fourth sub-accommodating cavity, the third sub-accommodating cavity is located below the second filler 21, and the fourth sub-accommodating cavity is in communication with the second pipeline 25. The first baffle plate is provided with an overflow hole, and the third sub-accommodating cavity is in communication with the fourth sub-accommodating cavity through the overflow hole; or an overflow portion is disposed between the first baffle plate and the first temporary storage body, and the third sub-accommodating cavity is in communication with the fourth sub-accommodating cavity through the overflow portion. In this way, adopting the above arrangement of the first baffle plate ensures that after the impurities are sprayed through the second spray structure 22, the impurities entering the third sub-accommodating cavity are fully deposited in the third sub-accommodating cavity, thereby preventing the second spray structure 22 from being blocked due to the impurities entering the second pipeline 25, and thus improving spray efficiency of the second spray structure 22. Adopting the above arrangement makes an overflow mode of liquid in the second temporary storage structure 24 more diverse, so as to meet different usage requirements and working conditions, thereby improving preparation flexibility of the workers.

Optionally, the second filler 21 includes a plurality of first sub-filler sheets, adjacent two first sub-filler sheets are disposed in a staggered manner and form a flow passage, a surface of each of the plurality of first sub-filler sheets is provided with an interference flow convex portion or an interference flow concave portion located in the flow passage. In this way, liquid and gas mixing with the impurities gather in the flow passage, and adopting the above arrangement of the interference flow convex portion or the interference flow concave portion makes the gas flow turbulentially at the interference flow convex portion or the interference flow concave portion, which further increases a contact area between the gas and the liquid, so as to ensure that the impurities mixed in the gas are in contact with the liquid as much as possible and are impacted by the liquid into the second temporary storage structure 24.

In other embodiments not shown in the accompanying drawings, the gas absorption system further includes a filter screen or a filter membrane located between the gas pretreatment device 20 and the intake port 11. In this way, with the above arrangement, a preliminarily filtration is performed by the filter screen or the filter membrane, and a secondary filtration is performed by the gas pretreatment device 20, thereby improving overall filtering efficiency of the gas absorption system.

Optionally, a bottom surface of the first temporary storage structure 34 is provided with a flow guidance slope. In this way, adopting the above arrangement makes the solution collect at a relatively low position on a bottom surface of the first temporary storage structure 34, thereby facilitating entry of the above solution into the first pipeline 35, and thus avoiding increasing cleaning difficulty for the workers due to accumulation of the solution at a dead zone of the first temporary storage structure 34.

In this embodiment, the bottom surface of the first temporary storage structure 34 is an inclined surface. In this way, adopting the above arrangement makes the bottom surface of the first temporary storage structure 34 easier to process and implement, thereby reducing a preparation cost of the gas absorption system.

In other embodiments not shown in the accompanying drawings, the bottom surface of the first temporary storage structure 34 is a conical surface.

In this embodiment, the second temporary storage structure 24 and the second liquid supply device are of a same structure, so as to reduce an amount of structures of the gas absorption system, which facilitates disassembly and maintenance of the gas absorption system for the workers.

It should be noted that a relationship between the second temporary storage structure 24 and the second liquid supply device is not limited thereto and may be adjusted according to working conditions and usage requirements. Optionally, the second temporary storage structure 24 is in communication with the second liquid supply device, so as to provide water for the second spray structure 22 through the second liquid supply device, and water and impurities flowing out through the second filler 21 are stored temporarily in the second temporary storage structure 24, so that the water enters the second spray structure 22 again to continue spraying.

As shown in FIG. 3, the housing 10 is provided with an accommodating cavity 13, the intake port 11 is in communication with the exhaust port 12 through the accommodating cavity 13, and the gas absorption assembly 30 is located inside the accommodation cavity 13. There is one intake port 11, and there is one gas pretreatment device 20; or there are a plurality of intake ports 11, the plurality of intake ports 11 are disposed around the accommodating cavity 13, there are a plurality of gas pretreatment devices 20, and the plurality of gas pretreatment devices 20 and the plurality of intake ports 11 are in a one-to-one correspondence. In this way, adopting the above arrangement makes selection of an amount of intake ports 11 more flexible, so as to meet different usage requirements and working conditions, thereby improving preparation flexibility of the workers.

In this embodiment, there are two intake ports 11, an intake port 11 is located at a side of the accommodation cavity 13, and another intake port 11 is located at another side of the accommodation cavity 13, there are two gas pretreatment devices 20, and the two gas pretreatment devices 20 and the two intake ports 11 are in a one-to-one correspondence. Each of the gas pretreatment devices 20 is configured to filter impurities in the air or the flue gas entering through respective intake ports 11, so as to ensure that all the air or all the flue gas entering the gas absorption system are filtered for impurities, thereby avoiding affecting CO₂ capture efficiency of the gas absorption system due to accumulation of impurities in the gas absorption system.

It should be noted that selection of an amount of intake ports 11 is not limited thereto and may be adjusted according to working conditions and usage requirements. Optionally, the amount of intake ports 11 is three, four, five and multiple.

It should be noted that selection of an amount of gas pretreatment devices 20 is not limited thereto, as long as the amount of gas pretreatment devices 20 is consistent with the amount of intake ports 11.

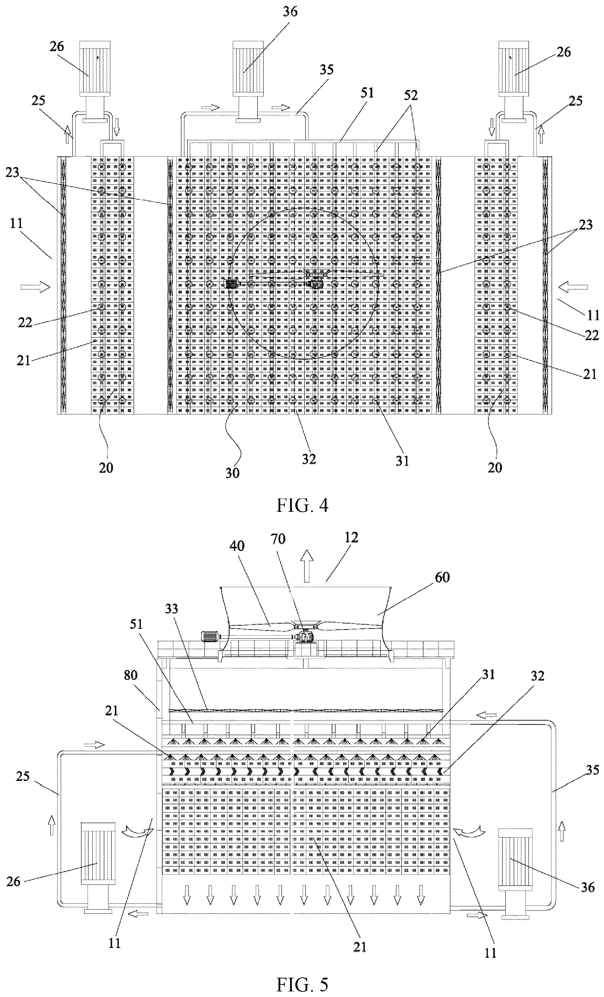

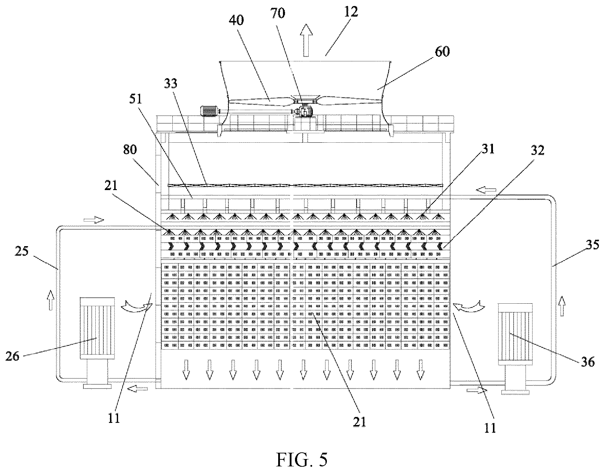

As shown in FIG. 3 and FIG. 5, the gas absorption system further includes a gas delivery device 40 and a first detection device. The gas delivery device 40 is disposed at at least one of the exhaust port 12 and the intake port 11, gas can be delivered to an outside of the gas absorption system through the intake port 11. The first detection device is disposed inside the first temporary storage structure 34 for detecting a concentration of carbonate of a solution. In a case that a detection value of the first detection device reaches a first preset concentration value, the gas delivery device 40 is controlled to stop running. In this way, during an operation of the gas absorption system, in the case that the detection value of the first detection device reaches the preset concentration value, it is determined that the gas absorption system has completed capture and absorption of CO₂ in the air or the flue gas, and the gas absorption system is controlled to stop exhausting gas at this time; or it is determined that capture of CO₂ by an alkaline solution is saturated, and the gas absorption system is controlled to supply the alkaline solution at this time.

Optionally, the gas delivery device 40 includes a fan, and the fan is disposed at the exhaust port 12; and/or the gas delivery device 40 includes a compressor, and the compressor is disposed at the intake port 11. In this way, with the above arrangement of the fan, gas, obtained after the absorption and located in the gas absorption system, can be sucked out of the gas absorption system, so as to ensure that gas can smoothly flow in the gas absorption system. The compressor is configured to compress gas at the intake port into high-pressure gas, and then the high-pressure gas enters the gas absorption system, thereby increasing a flow rate of the gas, and thus improving CO₂ capture efficiency of the gas absorption system.

In this embodiment, the gas delivery device 40 includes the fan, and the fan is disposed at the exhaust port 12.

Optionally, in the case that the detection value of the first detection device reaches the preset concentration value, it is determined that capacity of CO₂ capture and CO₂ absorption of the alkaline solution in the first temporary storage structure 34 that has been put into use cannot meet usage requirements of the gas absorption system, and the first temporary storage structure 34 that has been put into use is replaced at this time, so as to improve stability of capability of capturing and absorbing CO₂ by the gas absorption system.

The gas absorption system further includes a second detection device. The second detection device is disposed inside the first temporary storage structure 34 for detecting a concentration of hydroxide of a solution; and in a case that a detection value of the second detection device is less than a second preset concentration value, the first pump body 36 is controlled to start. In this way, in the case that the detection value of the second detection device is less than the second preset concentration value, it is determined that the alkaline solution in the first temporary storage structure 34 is saturated and CO₂ capture efficiency cannot meet usage requirements, and the alkaline solution is supplemented into the first temporary storage structure 34 by an alkaline solution pump at this time, and until the detection value of the second detection device reaches a required value, the supplement of the alkaline solution is stopped.

Optionally, the gas absorption assembly 30 further includes a first liquid level gauge, and the first liquid level gauge is disposed in the first temporary storage structure 34 for detecting a height of a solution in the first temporary storage structure 34. In a case that a liquid level is lower than a first liquid level value, water is supplemented into the first temporary storage structure 34 by a water replenishment pump, and in a case that the liquid level reaches a preset liquid level, the supplement of the water is stopped.

Optionally, the gas pretreatment device 20 further includes a second liquid level gauge, and the second liquid level gauge is disposed in the second temporary storage structure 24 for detecting a height of a solution in the second temporary storage structure 24. In a case that a liquid level is lower than a second liquid level value, water is supplemented into the second temporary storage structure 24 by a water replenishment pump, and in a case that the liquid level reaches a preset liquid level, the supplement of the water is stopped.

As shown in FIG. 3 and FIG. 5, the gas absorption system further includes a wind duct 60 and a gearbox 70. The wind duct 60 is connected to the housing 10 and is located at the exhaust port 12 for guiding a flow of gas discharged through the exhaust port 12. The gearbox 70 is connected to a fan by means of a driving manner, so as to drive the fan to operate.

There is one first filler 32; or - optionally-there are a plurality of first fillers 32, and the plurality of first fillers 32 are disposed at intervals along a length direction of the gas absorption system.

Optionally, there is one second filler 21; or, there are a plurality of second fillers 21, and the plurality of second fillers 21 are disposed at intervals along a length direction of the gas absorption system.

Optionally, a spray density of the first spray structure 31 ranges from 0 m³/m² * h to 20 m³/m² * h, and deionized water is used.

Optionally, the gas absorption system further includes a hydroturbine and a generator. The hydroturbine is located below the first temporary storage structure 34, and liquid inside the first temporary storage structure 34 flows to the hydroturbine through the flow guidance slope. The generator is connected to the hydroturbine. In this way, during an operation of the gas absorption system, the hydroturbine is driven to rotate by a liquid potential energy, thereby achieving a power generation function of the generator, and the generator may supply power to the first pump body 36 and the second pump body 26, so as to recycle the liquid potential energy, thereby reducing overall energy consumption of the gas absorption system.

Optionally, the gas absorption system further includes a stirring device. The stirring device is disposed inside the first temporary storage structure 34. In this way, adopting the arrangement of the stirring device makes mixing of fresh water and fresh alkaline solution more uniform.

In this embodiment, the method for capturing the carbon dioxide is applied to a gas absorption system, and the gas absorption system is configured to absorb carbon dioxide gas. The gas absorption system includes a housing and a gas absorption assembly, the housing is provided with an intake port and an exhaust port, and the intake port and exhaust port are disposed opposite to each other. The gas absorption assembly is disposed inside the housing and is located downstream of a gas pretreatment device, and the gas absorption assembly includes a liquid supply device and a spray structure that are in communication with each other for providing an alkaline solution; and the alkaline solution flowing out through the spray structure chemically reacts with carbon dioxide gas in gas to absorb the carbon dioxide gas.

Optionally, the gas absorption system is a cross-flow absorption system or a countercurrent absorption system. The cross-flow absorption system is that an intake direction of air or flue gas is consistent with an exhaust direction of the air or the flue gas. The countercurrent absorption system is that there is an included angle between the intake direction of the air or the flue gas and the exhaust direction of the air or the flue gas.

Optionally, the spray structure is a nozzle.

Optionally, the gas absorption assembly includes a filler and a water collector. The filler is located below the spray structure. The water collector is disposed opposite to the filler. In this way, disposal of the filler provides sufficient contact surface for CO₂ in the air or the flue gas and the alkaline solution, so that the CO₂ in the air or the flue gas fully reacts with the alkaline solution, which further improves efficiency of capturing and absorbing CO₂ by the gas absorption assembly. The water collector is configured to recover absorption liquid in the gas absorption assembly to reduce fine water droplet drift carried in gas discharged through the gas absorption assembly. Adopting the above arrangement makes positioning of the water collector more flexible, so as to meet different usage requirements and working conditions, thereby improving preparation flexibility of the workers.

Specifically, the alkaline solution falls in a form of droplets from the spray structure into the filler, and flows in a form of a liquid film in the filler, and the alkaline solution falls in the form of the droplets into the first temporary storage structure after passing through the filler. The pretreated gas is in full contact with the alkaline solution in a water spraying area and the filler of the gas absorption assembly, so that CO₂ in the air or the flue gas chemically reacts with the alkaline solution, thereby capturing the CO₂. The captured CO₂ exists in the first temporary storage structure in a form of carbonate and bicarbonate ions, and the first pump body or the third pump body is configured to deliver the solution obtained after the reacting to a subsequent process system for processing. The first temporary storage structure is provided with a first liquid supply device to supplement water and hydroxide consumed in the solution.

Optionally, the filler is a thin-film water-spraying filler.

Optionally, the water collector is a PVC water collector, and the water collector is supported by a bracket.

In this embodiment, the gas absorption assembly further includes a first temporary storage structure. The first temporary storage structure is located below the filler for temporarily storing the solution obtained after the alkaline solution chemically reacts with the carbon dioxide gas. In this way, the solution, obtained after the alkaline solution chemically reacts with the carbon dioxide gas, is stored in the first temporary storage structure, which on the one hand facilitates post-treatment of the above solution, and on the other hand may achieve recycling of the solution, so as to avoid wasting of resource.

In this embodiment, the first temporary storage structure and the liquid supply device are of a same structure. In an early operation of the gas absorption system, an alkaline solution is disposed in the first temporary storage structure, the alkaline solution is sprayed to the filler through the spray structure to react with CO₂ in the air or the flue gas, and the solution obtained after the reacting is stored temporarily in the first temporary storage structure, so that the solution enters the spray structure again to continue spraying, so as to achieve recycling of the alkaline solution, until a concentration of carbonate in the alkaline solution reaches a preset concentration value, CO₂ capture and CO₂ absorption are stopped at this time, and the solution in the first temporary storage structure is replaced with the alkaline solution.

It should be noted that a relationship between the first temporary storage structure and the liquid supply device is not limited thereto and may be adjusted according to working conditions and usage requirements. Optionally, the first temporary storage structure is in communication with the liquid supply device, so as to provide the alkaline solution for the spray structure through the liquid supply device, and the solution, obtained after the alkaline solution reacts with the CO₂, is stored temporarily in the first temporary storage structure, so that the solution enters the spray structure again to continue spraying.

Optionally, there is one first temporary storage structure; or there are a plurality of first temporary storage structures, and the plurality of first temporary storage structures are selectively put into use. In this way, during an operation of the gas absorption system, a usage state (putting into use or not putting into use) of the first temporary storage structure may be adjusted according to the concentration of the carbonate in the first temporary storage structure, so as to supplement a fresh alkaline solution into the spray structure, thereby achieving rapid and efficient CO₂ capture of the gas absorption system.

Optionally, there are a plurality of first temporary storage structures, and the gas absorption assembly further includes a main pipeline, a plurality of branch pipelines and a plurality of control valves. A first end of the main pipeline is in communication with the spray structure. The plurality of branch pipelines and the plurality of first temporary storage structures are in a one-to-one correspondence, an end of each of the plurality of branch pipelines is in communication with respective first temporary storage structures, and another end of each of the plurality of branch pipelines is in communication with a second end of the main pipeline. The plurality of control valves and the plurality of branch pipelines are in a one-to-one correspondence, and each of the plurality of control valves is configured to control an on-off state of respective branch pipelines. At any time, at least one of the plurality of control valves is in an open state. In this way, the on-off state of the branch pipeline is controlled by the control valve corresponding to the branch pipeline, so as to control a usage state of the first temporary storage structure in communication with the branch pipeline, thereby making it easier and simpler for the workers to control the usage state of the first temporary storage structure, and thus reducing control difficulty. Adopting the above arrangement enables the plurality of first temporary storage structures to be connected in parallel, and at any time, the at least one of the plurality of temporary storage structures is controlled to put into use, so as to provide the alkaline solution for the spray structure.

In this embodiment, the gas absorption assembly further includes a first pump body or a third pump body, the first pump body or the third pump body is disposed on the main pipeline or the branch pipeline, and the first pump body or the third pump body is configured to pump a solution entering the first temporary storage structure into the spray structure. In this way, the solution is pumped into the spray structure through the first pump body or the third pump body, so as to ensure that the alkaline solution can be sprayed through the spray structure to react with CO₂, thereby improving spray reliability of the spray structure, and thus improving operational reliability of the gas absorption system.

In this embodiment, the gas absorption system further includes an electrolysis device, the electrolysis device is located downstream of the first temporary storage structure, and a carbonic acid solution discharged through the first temporary storage structure is electrolyzed by the electrolysis device, so that potassium hydroxide and hydrogen are generated at a cathode of the electrolysis device, and mixing gas including oxygen and carbon dioxide is generated at an anode of the electrolysis device; and the potassium hydroxide is used for absorbing the carbon dioxide in the gas absorption system.

### Embodiment 2

Differences between the method for capturing the carbon dioxide in embodiment 2 and the method for capturing the carbon dioxide in the embodiment 1 are that: a value of m, a value of n and electric charge applied to an electrolysis device.

In this embodiment, the value of m is 0.3 mol/L, the value of n is 5.5 mol/L, the electric charge applied to the electrolysis device is controlled, so that electric charge obtained by 1 mol of a carbonate solution is 55.1 A·h, and power consumption of the electrolysis device is measured to be 3.36 kWh/kgCO₂, and a molar yield ratio of carbon dioxide gas to hydrogen is 1: 1.03.

### Embodiment 3

Differences between the method for capturing the carbon dioxide in embodiment 3 and the method for capturing the carbon dioxide in the embodiment 1 are that: a value of m, a value of n and electric charge applied to an electrolysis device.

In this embodiment, the value of m is 5 mol/L, the value of n is 1 mol/L, power consumption of the electrolysis device is measured to be 11.46 kWh/kgCO₂, the electric charge applied to the electrolysis device is controlled, so that electric charge obtained by 1 mol of a carbonate solution is 187.6 A·h, and a molar yield ratio of carbon dioxide gas to hydrogen is 1: 3.5.

### Embodiment 4

Differences between the method for capturing the carbon dioxide in embodiment 4 and the method for capturing the carbon dioxide in the embodiment 1 are that: a value of m, a value of n and electric charge applied to an electrolysis device.

In this embodiment, the value of m is 0.1 mol/L, the value of n is 5.3 mol/L, the electric charge applied to the electrolysis device is controlled, so that electric charge obtained by 1 mol of a carbonate solution is 54.1 A·h, and power consumption of the electrolysis device is measured to be 3.29 kWh/kgCO₂, and a molar yield ratio of carbon dioxide gas to hydrogen is 1: 1.

### Embodiment 5

Differences between the method for capturing the carbon dioxide in embodiment 5 and the method for capturing the carbon dioxide in the embodiment 1 are that: a value of m, a value of n and electric charge applied to an electrolysis device.

In this embodiment, the value of m is 2.5 mol/L, the value of n is 0.5 mol/L, the electric charge applied to the electrolysis device is controlled, so that electric charge obtained by 1 mol of a carbonate solution is 187.6 A·h, and power consumption of the electrolysis device is measured to be 11.83 kWh/kgCO₂, and a molar yield ratio of carbon dioxide gas to hydrogen is 1: 3.5.

### Embodiment 6

Differences between the method for capturing the carbon dioxide in embodiment 6 and the method for capturing the carbon dioxide in the embodiment 1 are that: a value of m, a value of n and electric charge applied to an electrolysis device.

In this embodiment, the electric charge applied to the electrolysis device is controlled, so that electric charge obtained by 1 mol of a carbonate solution is 107.2 A·h, and power consumption of the electrolysis device is measured to be 6.63 kWh/kgCO₂, and a molar yield ratio of carbon dioxide gas to hydrogen is 1: 2.01.

The results of power consumption of an electrolysis device and a molar yield ratio of carbon dioxide gas to hydrogen respectively measured in all the above embodiments are summarized in Table 1.

Table 1 is a table for comparing the results of the power consumption of the electrolysis device and the molar yield ratio of the carbon dioxide gas to the hydrogen in various embodiments.

**Table 1**

| | Power consumption of electrolysis device (kWh/kgCO₂) | Molar yield ratio of carbon dioxide gas to hydrogen (vol%) |
|---|---|---|
| Embodiment 1 | 3.30 | 1: 1.01 |
| Embodiment 2 | 3.36 | 1: 1.03 |
| Embodiment 3 | 11.46 | 1: 3.5 |
| Embodiment 4 | 3.29 | 1: 1 |
| Embodiment 5 | 11.83 | 1: 3.5 |
| Embodiment 6 | 6.63 | 1: 2.01 |

Through the above comparison, the following conclusions can be obtained.

Firstly, from a comparison of the embodiment 3 and the embodiment 5, it can be seen that the at least one of the concentration of the hydroxide and the concentration of the carbonate of the solution in the temporary storage structure is precisely controlled through the method for capturing the carbon dioxide in the embodiments, and in a case that the solution in the temporary storage structure is sent to the electrolysis device for the electrolysis, a concentration range of the hydroxide of the solution and a concentration range of the carbonate of the solution include but are not limited to the preferred ranges of the present application. Limiting the concentration range of the hydroxide and the concentration range of the carbonate within the preferred ranges of the present application is beneficial for reducing energy consumption of an electrolysis device, thereby reducing a process cost of a system for capturing carbon dioxide, and thus effectively solving problems in that capture efficiency of carbon dioxide gas and overall energy consumption of a system for capturing carbon dioxide are relatively difficult to control in the prior art.

Secondly, from a comparison of the embodiment 1 to the embodiment 6, it can be seen that the molar yield ratio of the carbon dioxide gas to the hydrogen during the process of the electrolysis is adjustable through the method for capturing the carbon dioxide in the embodiments, and the molar yield ratio of the carbon dioxide gas to the hydrogen in a system may be flexibly adjusted according to actual demands of a device for utilizing carbon dioxide gas located downstream, thereby greatly improving an application scope of a system.

### Embodiment 7

Differences between the gas absorption system in the embodiment 7 and the gas absorption system in the embodiment 1 are that: an intake direction and an exhaust direction of the gas absorption system.

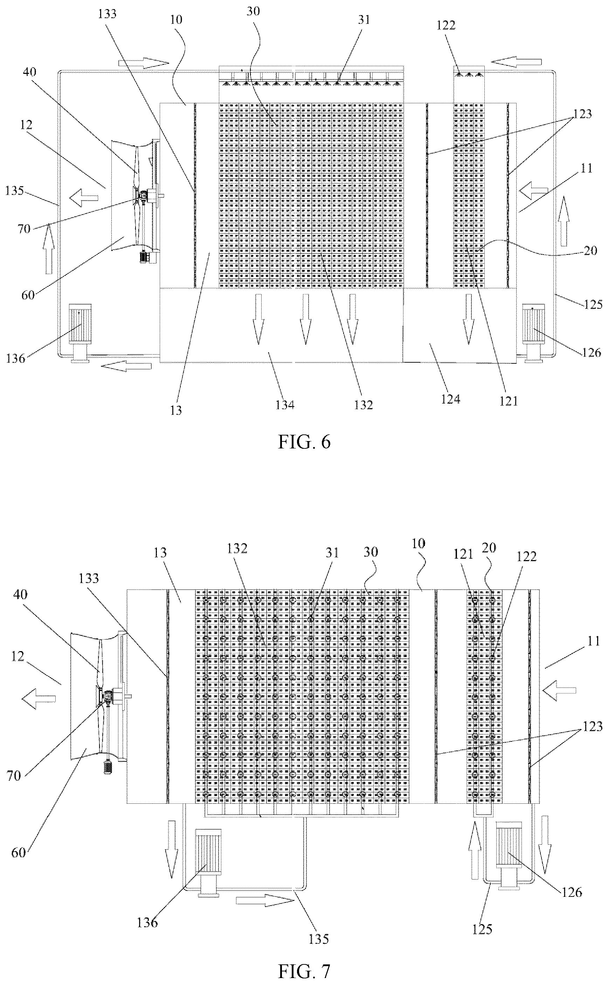

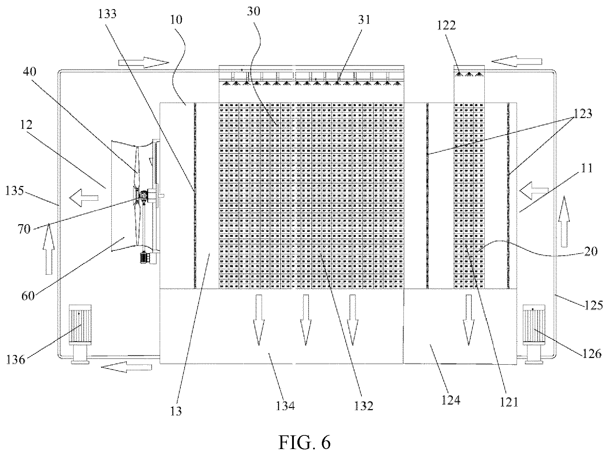

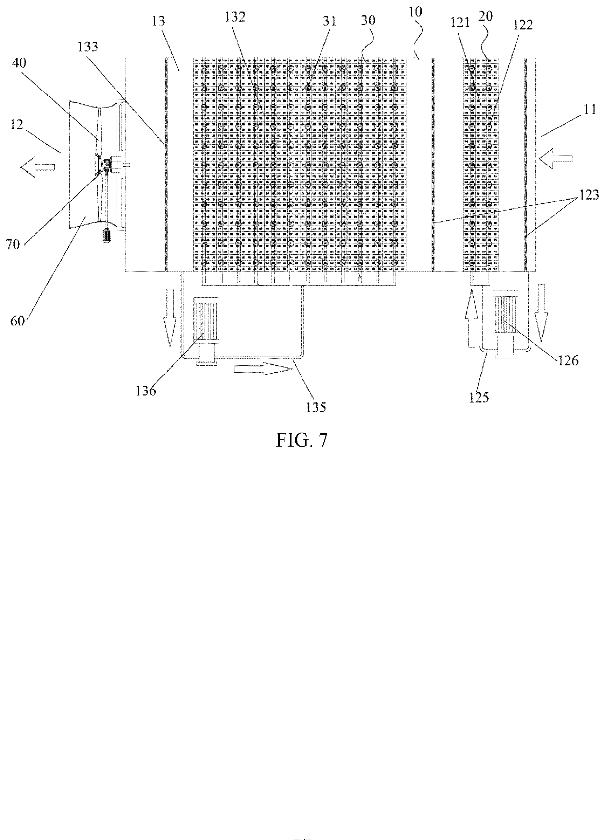

As shown in FIG. 6 and FIG. 7, the gas absorption system is configured to absorb carbon dioxide gas in environment, the gas absorption system includes a housing 10, a gas pretreatment device 20, a gas absorption assembly 30 and a gas delivery device 40. The housing 10 is provided with an intake port 11 and an exhaust port 12 that are in communication with each other, and the intake port 11 and the exhaust port 12 are disposed opposite to each other. The gas pretreatment device 20 is disposed inside the housing 10 and is located at the intake port 11 for filtering impurities in gas entering the intake port 11. The gas absorption assembly 30 is disposed inside the housing 10 and is located downstream of the gas pretreatment device 20. The gas absorption assembly 30 includes a first liquid supply device and a first spray structure 31, and the first liquid supply device is in communication with the first spray structure 31, so as to provide an alkaline solution. The alkaline solution flowing out through the first spray structure 31 chemically reacts with carbon dioxide gas in gas to absorb the carbon dioxide gas. The gas delivery device 40 is disposed at at one of the exhaust port 12 and the intake port 11, gas can be delivered to an outside of the gas absorption system through the intake port 11.

Specifically, the gas pretreatment device 20 is disposed inside the housing 10 and is located at the intake port 11, and the gas absorption assembly 30 is located downstream of the gas pretreatment device 20. In this way, during an operation of the gas absorption system, after air or flue gas enters the gas absorption system through the intake port 11, the air or the flue gas passes through the gas pretreatment device 20 first, and impurities in the air or the flue gas are filtered by the gas pretreatment device 20, which avoids accumulation of the above impurities in the gas absorption system, and avoids affecting efficiency of absorbing and capturing carbon dioxide gas by the gas absorption system caused by the above impurities entering the gas absorption assembly 30, so as to solve problems in that the impurities such as solid particles mixing in the air or the flue gas are easily accumulated in a system for capturing CO₂ in the prior art, and thus reducing an operation cost and a maintenance cost of the gas absorption system. Absorbing the impurities in the air or the flue gas can also improve a purity of a solution obtained after the alkaline solution chemically reacts with the carbon dioxide gas, thereby reducing a cost of a post-treatment process.

Optionally, the gas delivery device 40 includes a fan, the fan is disposed at the exhaust port 12; and/or the gas delivery device 40 includes a compressor, and the compressor is disposed at the intake port 11. In this way, with the above arrangement of the fan, gas, obtained after the absorption and located in the gas absorption system, can be sucked out of the gas absorption system, so as to ensure that gas can smoothly flow in the gas absorption system. The compressor is configured to compress gas at the intake port 11 into high-pressure gas, and then the high-pressure gas enters the gas absorption system, thereby increasing a flow rate of the gas, and thus improving CO₂ capture efficiency of the gas absorption system.

In this embodiment, the gas delivery device 40 includes the fan, and the fan is disposed at the exhaust port 12.

Optionally, the alkaline solution is one of sodium hydroxide, potassium hydroxide, potassium carbonate and sodium carbonate, and solutions with different concentrations may be prepared with deionized water as needed.

In this embodiment, an alkaline solution is used as an absorbent, which not only can capture CO₂ with a high concentration, but also can capture CO₂ with a low concentration, so as to realize the capturing of CO₂ with a wide concentration range.

In this embodiment, the gas absorption system is a cross-flow absorption system, i.e., an intake direction of the air or the flue gas is consistent with an exhaust direction of the air or the flue gas.

In this embodiment, there are a plurality of first spray structures 31, the plurality of first spray structures 31 are disposed at intervals along a flow direction of the gas in the gas absorption system, thereby increasing a quantity of the alkaline solution sprayed out through the first spray structures 31, and thus ensuring that the alkaline solution sprayed out through the first spray structures 31 can fully capture and absorb CO₂ in the air or the flue gas.

Optionally, the first spray structure 31 is a nozzle.

Optionally, the gas absorption assembly 30 includes a third filler 132 and a third water collector 133. The third filler 132 is located below the first spray structure 31. The third water collector 133 is disposed opposite to the third filler 132. The third water collector 133 is located between the exhaust port 12 and the third filler 132; and/ or the third water collector 133 is located between the third filler 132 and the gas pretreatment device 20. In this way, disposal of the third filler 132 provides sufficient contact surface for the CO₂ and the alkaline solution, so that the CO₂ in the air or the flue gas fully reacts with the alkaline solution, which further improves efficiency of capturing and absorbing CO₂ by the gas absorption assembly 30. The first water collector 33 is configured to recover water vapor in the housing 10 to reduce fine water droplet drift carried in the gas discharged through the exhaust port 12, which can effectively prevent a loss of liquid water caused by a phenomenon of water splashing at the exhaust port 12. Adopting the above arrangement makes positioning of the third water collector 133 more flexible, so as to meet different usage requirements and working conditions, thereby improving preparation flexibility of the workers.

Specifically, the alkaline solution falls in a form of droplets from the first spray structure 31 into the third filler 132, and flows in a form of a liquid film in the third filler 132, and the alkaline solution falls in the form of the droplets into the third temporary storage structure 134 after passing through the third filler 132. The gas enters the gas absorption assembly 30 after the impurities carried in the air or the flue gas are removed through the gas pretreatment device 20, and the pretreated gas is in full contact with the alkaline solution in a water spraying area and the third filler 132 of the gas absorption assembly 30, so that CO₂ in the air or the flue gas chemically reacts with the alkaline solution, thereby capturing the CO₂. The captured CO₂ exists in the third temporary storage structure 134 in a form of carbonate and bicarbonate ions, and the third pump body 136 is configured to deliver the solution obtained after the reacting to a subsequent process system for processing. The third temporary storage structure 134 is provided with a first liquid supply device to supplement water and hydroxide consumed in the solution.

In this embodiment, the third water collector 133 is located between the exhaust port 12 and the third filler 132 for recovering fine water droplet drift carried in the gas discharged through the exhaust port 12.

It should be noted that the position of the third water collector 133 is not limited thereto and may be adjusted according to working conditions and usage requirements.

In other embodiments not shown in the accompanying drawings, the third water collector 133 is located between the third filler 132 and the gas pretreatment device 20.

In other embodiments not shown in the accompanying drawings, there are a plurality of third water collectors 133, at least one of the plurality of third water collectors 133 is located between the exhaust port 12 and the third filler 132, and at least one another of the plurality of third water collectors 133 is located between the third filler 132 and the gas pretreatment device 20 for fully recovering water vapor in the housing 10.

Optionally, the third filler 132 is a thin-film water-spraying filler.

Optionally, the third water collector 133 is a PVC water collector, and the third water collector 133 is supported by a bracket.

As shown in FIG. 6, the gas absorption assembly 30 further includes a third temporary storage structure 134. The third temporary storage structure 134 is located below the third filler 132 for temporarily storing the solution obtained after the alkaline solution chemically reacts with the carbon dioxide gas. In this way, the solution obtained after the alkaline solution chemically reacts with the carbon dioxide gas is stored in the third temporary storage structure 134, which on the one hand facilitates post-treatment of the above solution, and on the other hand may achieve recycling of the solution, so as to avoid wasting of resource.

In this embodiment, the third temporary storage structure 134 and the first liquid supply device are of a same structure. In an early operation of the gas absorption system, an alkaline solution is disposed in the third temporary storage structure 134, the alkaline solution is sprayed to the third filler 132 through the first spray structure 31 to react with CO₂ in the air or the flue gas, and the solution obtained after the reacting is stored temporarily in the third temporary storage structure 134, so that the solution enters the first spray structure 31 again to continue spraying, so as to achieve recycling of the alkaline solution, until a concentration of carbonate in the alkaline solution reaches a preset concentration value, CO₂ capture and CO₂ absorption are stopped at this time, and the solution in the third temporary storage structure 134 is replaced with the alkaline solution.

It should be noted that a relationship between the third temporary storage structure 134 and the first liquid supply device is not limited thereto and may be adjusted according to working conditions and usage requirements. Optionally, the third temporary storage structure 134 is in communication with the first liquid supply device, so as to provide the alkaline solution for the first spray structure 31 through the first liquid supply device, and the solution obtained after the alkaline solution reacts with the CO₂ is stored temporarily in the third temporary storage structure 134, so that the solution enters the first spray structure 31 again to continue spraying.

Optionally, there is one third temporary storage structure 134; or there are a plurality of third temporary storage structures 134, and the plurality of third temporary storage structures 134 are selectively put into use. In this way, during an operation of the gas absorption system, a usage state (putting into use or not putting into use) of the third temporary storage structure 134 may be adjusted according to a concentration of carbonate in the third temporary storage structure 134, so as to supplement a fresh alkaline solution into the first spray structure 31, thereby achieving rapid and efficient CO₂ capture of the gas absorption system.

Optionally, there are a plurality of third temporary storage structures 134, and the gas absorption assembly 30 further includes a second main pipeline 135, a plurality of third branch pipelines and a plurality of control valves. A first end of the second main pipeline 135 is in communication with the first spray structure 31. The plurality of third branch pipelines and the plurality of third temporary storage structures 134 are in a one-to-one correspondence, an end of each of the plurality of third branch pipelines is in communication with respective third temporary storage structures 134, and another end of each of the plurality of third branch pipelines is in communication with a second end of the second main pipeline 135. The plurality of control valves and the plurality of third branch pipelines are in a one-to-one correspondence, and each of the plurality of control valves is configured to control an on-off state of respective third branch pipelines. At any time, at least one of the plurality of control valves is in an open state. In this way, the on-off state of the third branch pipeline is controlled by the control valve corresponding to the third branch pipeline, so as to control a usage state of the third temporary storage structure 134 in communication with the third branch pipeline, thereby making it easier and simpler for the workers to control the usage state of the third temporary storage structure 134, thereby reducing control difficulty. Adopting the above arrangement enables the plurality of third temporary storage structures 134 to be connected in parallel, and at any time, at least one of the plurality of third temporary storage structures 134 is controlled to put into use, so as to provide the alkaline solution for the first spray structure 31.

Optionally, the gas absorption assembly 30 further includes a third detection device disposed on the second main pipeline 135 for detecting a concentration of carbonate of a solution in the second main pipeline 135, and in a case that a detection value of the third detection device reaches a preset concentration value, a third branch pipeline corresponding to a third temporary storage structure 134 that has been put into use is controlled to be in a disconnected state by at least one control valve, and at least one another third temporary storage structure 134 is controlled to put into use by at least one another control valve. In this way, during an operation of the gas absorption system, in a case that a detection value of the third detection device reaches a preset concentration value, it is determined that capacity of CO₂ capture and CO₂ absorption of the alkaline solution in the third temporary storage structure 134 that has been put into use cannot meet usage requirements of the gas absorption system, and the third temporary storage structure 134 that has been put into use is replaced at this time, so as to improve stability of capability of capturing and absorbing CO₂ by the gas absorption system.

As shown in FIG. 6 and FIG. 7, the gas absorption assembly 30 further includes a third pump body 136. The third pump body 136 is disposed on one of the second main pipeline 135 and the third branch pipeline for pumping a solution entering the third temporary storage structure 134 into the first spray structure 31. In this way, the solution is pumped into the first spray structure 31 through the third pump body 136, so as to ensure that the alkaline solution can be sprayed through the first spray structure 31 to react with CO₂, thereby improving spray reliability of the first spray structure 31, and thus improving operational reliability of a system for capturing carbon dioxide.

Optionally, the third pump body 136 is a first pump body.

As shown in FIG. 6 and FIG. 7, the gas pretreatment device 20 further includes a fourth filler 121, a third liquid supply device, a third spray structure 122 and a fourth water collector 123. The fourth filler 121 is disposed opposite to the intake port 11. The third spray structure 122 is located above the fourth filler 121, and the third liquid supply device is in communication with the third spray structure 122. The fourth water collector 123 is disposed opposite to the fourth filler 121. Specifically, the third spray structure 122 is configured to spray water, during a process of filtering impurities in the air or the flue gas by the gas pretreatment device 20, disposal of the fourth filler 121 provides sufficient contact surface for the impurities in the air or the flue gas and water, so as to ensure that the water can sink the impurities, thereby preventing the impurities from entering the gas absorption assembly 30. The fourth water collector 123 is configured to recover water vapor in the housing 10, so as to reduce fine water droplet drift carried in gas discharged through the exhaust port 12, which can effectively prevent a loss of liquid water caused by a phenomenon of water splashing at the exhaust port 12.

Specifically, after the gas passes through the gas pretreatment device 20, a humidity of the gas may be increased, so as to reduce an evaporation rate of water in the gas absorption system, thereby reducing a loss of deionized water, and thus reducing a cost of capturing CO₂.

In this embodiment, the second liquid supply device is configured to supply tap water.

Optionally, the third spray structure 122 is a nozzle.

Optionally, the fourth filler 121 is a thin-film water-spraying filler.

Optionally, the fourth water collector 123 is a PVC water collector.

Optionally, there is one fourth water collector 123; or, there are a plurality of fourth water collectors 123, at least one of the plurality of fourth water collectors 123 is located at a first side of the fourth filler 121, and at least one another of the plurality of fourth water collectors 123 is located at a second side of the fourth filler 121. In this way, adopting the above arrangement makes selection of an amount of fourth water collectors 123 more flexible, so as to meet different usage requirements and working conditions, thereby improving preparation flexibility of the workers. Disposal of the plurality of fourth water collectors 123 can improve recovery efficiency of water vapor, which further prevents a loss of liquid water caused by a phenomenon of water splashing at the exhaust port 12.

In this embodiment, there are two fourth water collectors 123, a fourth water collector 123 is located at the first side of the fourth filler 121, and another fourth water collector 123 is located at the second side of the fourth filler 121, so as to fully recover water vapor in the housing 10.

It should be noted that the amount of fourth water collectors 123 is not limited thereto and may be adjusted according to working conditions and usage requirements. Optionally, the amount of fourth water collectors 123 is three, four, five and multiple.

As shown in FIG. 6 to FIG. 7, the gas pretreatment device 20 further includes a fourth temporary storage structure 124, a third main pipeline 125 and a fourth pump body 126. The fourth temporary storage structure 124 is located below the fourth filler 121 for temporarily storing liquid flowing out through the fourth filler 121. An end of the third main pipeline 125 is in communication with the third spray structure 122, and another end of the third main pipeline 125 is in communication with the fourth temporary storage structure 124. The fourth pump body 126 is disposed on the third main pipeline 125 for pumping the liquid entering the fourth temporary storage structure 124 into the third spray structure 122. In this way, water flowing out through the fourth filler 121 is stored in the fourth temporary storage structure 124, so as to achieve recycling of the water, thereby avoiding waste of resource. The water is pumped into the third spray structure 122 through the fourth pump body 126, so as to ensure that the water can be sprayed through the third spray structure 122 to sink the impurities, thereby improving spray reliability of the third spray structure 122 and operational reliability of the gas pretreatment device 20.

Optionally, the fourth temporary storage structure 124 includes a second temporary storage body and a second baffle plate. The second baffle plate is disposed inside the second temporary storage body for dividing an inner cavity of the second temporary storage body into a first sub-accommodating cavity and a second sub-accommodating cavity, the first sub-accommodating cavity is located below the fourth filler 121, and the second sub-accommodating cavity is in communication with the third main pipeline 125. The second baffle plate is provided with an overflow hole, and the first sub-accommodating cavity is in communication with the second sub-accommodating cavity through the overflow hole; or an overflow portion is disposed between the second baffle plate and the second temporary storage body, and the first sub-accommodating cavity is in communication with the second sub-accommodating cavity through the overflow portion. In this way, adopting the above arrangement of the second baffle plate ensures that after the impurities are sprayed through the third spray structure 122, the impurities entering the first sub-accommodating cavity are fully deposited in the first sub-accommodating cavity, thereby preventing the third spray structure 122 from being blocked due to the impurities entering the third main pipeline 125, and thus improving spray efficiency of the third spray structure 122. Adopting the above arrangement makes an overflow mode of liquid in the fourth temporary storage structure 124 more diverse, so as to meet different usage requirements and working conditions, thereby improving preparation flexibility of the workers.

Optionally, the fourth filler 121 includes a plurality of second sub-filler sheets, adjacent two second sub-filler sheets are disposed in a staggered manner and form a flow passage, a surface of each of the plurality of second sub-filler sheets is provided with an interference flow convex portion or an interference flow concave portion located in the flow passage. In this way, liquid and gas mixing with the impurities gather in the flow passage, and adopting the above arrangement of the interference flow convex portion or the interference flow concave portion makes the gas flow turbulentially at the interference flow convex portion or the interference flow concave portion, which further increases a contact area between the gas and the liquid, so as to ensure that the impurities mixed in the gas are in contact with the liquid as much as possible and are impacted by the liquid into the fourth temporary storage structure 124.

In other embodiments not shown in the accompanying drawings, the gas pretreatment device 20 is a filter screen or a filter membrane. In this way, a preparation cost and preparation difficulty of the gas pretreatment device 20 are reduced with the above arrangement.

Optionally, a bottom surface of the third temporary storage structure 134 is provided with a flow guidance slope. In this way, adopting the above arrangement makes the solution collect at a relatively low position on a bottom surface of the third temporary storage structure 134, thereby facilitating entry of the above solution into the second pipeline 135, and thus avoiding increasing cleaning difficulty for the workers due to accumulation of the solution at a dead zone of the third temporary storage structure 134.

In this embodiment, the bottom surface of the third temporary storage structure 134 is an inclined surface. In this way, adopting the above arrangement makes the bottom surface of the third temporary storage structure 134 easier to process and implement, thereby reducing a preparation cost of the gas absorption system.

In other embodiments not shown in the accompanying drawings, the bottom surface of the third temporary storage structure 134 is a conical surface.

In this embodiment, the fourth temporary storage structure 124 and the third liquid supply device are of a same structure, so as to reduce an amount of structures of the gas absorption system, which facilitates disassembly and maintenance of the gas absorption system for the workers.

It should be noted that a relationship between the fourth temporary storage structure 124 and the third liquid supply device is not limited thereto and may be adjusted according to working conditions and usage requirements. Optionally, the fourth temporary storage structure 124 is in communication with the third liquid supply device, so as to provide water for the third spray structure 122 through the third liquid supply device, and water and impurities flowing out through the fourth filler 121 are stored temporarily in the fourth temporary storage structure 124, so that the water enters the third spray structure 122 again to continue spraying.

Optionally, the gas absorption assembly 30 further includes a first liquid level gauge, and the first liquid level gauge is disposed in the third temporary storage structure 134 for detecting a height of a solution in the third temporary storage structure 134. In a case that a liquid level is lower than a first liquid level value, water is supplemented into the third temporary storage structure 134 by a water replenishment pump, and in a case that the liquid level reaches a preset liquid level, the supplement of the water is stopped.

Optionally, the gas pretreatment device 20 further includes a second liquid level gauge, and the second liquid level gauge is disposed in the fourth temporary storage structure 124 for detecting a height of a solution in the fourth temporary storage structure 124. In a case that a liquid level is lower than a second liquid level value, water is supplemented into the fourth temporary storage structure 124 by a water replenishment pump, and in a case that the liquid level reaches a preset liquid level, the supplement of the water is stopped.

As shown in FIG. 6 and FIG. 7, the housing 10 is provided with an accommodating cavity 13, and the gas absorption assembly 30 is located inside the accommodation cavity 13. The gas absorption system further includes a wind duct 60 and a gearbox 70. The wind duct 60 is connected to the housing 10 and is located at the exhaust port 12 for guiding a flow of gas discharged through the exhaust port 12. The gearbox 70 is connected to a fan by means of a driving manner, so as to drive the fan to operate.

In this embodiment, wind enters from a side of the gas absorption system. The third temporary storage structure 134 is adjacent to the fourth temporary storage structure 124, the third temporary storage structure 134 is separated from the fourth temporary storage structure 124 by concrete, and an interior of the third temporary storage structure 134 is treated with an anticorrosion measure.

Optionally, there is one third filler 132; or, there are a plurality of third fillers 132, and the plurality of third fillers 132 are disposed at intervals along a length direction of the gas absorption system.

Optionally, there is one fourth filler 121; or, there are a plurality of fourth fillers 121, and the plurality of fourth fillers 121 are disposed at intervals along a length direction of the gas absorption system.

Optionally, a spray density of the first spray structure 31 ranges from 0 m³/m² * h to 20 m³/m² * h, and deionized water is used.

From the above description, it can be seen that the above embodiments of the present application achieve the following technical effects.

The alkaline solution is sprayed through the first spray structure, so that the alkaline solution flowing out through the first spray structure chemically reacts with the carbon dioxide gas in the gas to absorb the carbon dioxide gas. During the above processes, the solution, obtained after the alkaline solution chemically reacts with the carbon dioxide gas, is temporarily stored in the first temporary storage structure, and the solution stored temporarily in the first temporary storage structure flows out again through the first spray structure, so as to achieve recycling of the solution. During a process of capturing carbon dioxide gas, the at least one of the concentration of the hydroxide and the concentration of the carbonate of the solution in the first temporary storage structure is detected in real time, and one of the alkaline solution and the water is supplemented into the first temporary storage structure according to the at least one of the concentration of the hydroxide and the concentration of the carbonate. The concentration of the hydroxide and the concentration of the carbonate of the solution in a final state are precisely controlled by means of alkaline solution supplement or water addition, so as to meet requirements of a process of a subsequent electrolysis, thereby reducing energy consumption of an overall system, and further solving problems in that capture efficiency of carbon dioxide gas and overall energy consumption of a system for capturing carbon dioxide are relatively difficult to control in the prior art, and thus improving capture efficiency of a system for capturing carbon dioxide. During the process of detecting the at least one of the concentration of the hydroxide and the concentration of the carbonate of the solution in the first temporary storage structure in real time, in the case that the concentration of the hydroxide is detected to be less than or equal to m and the concentration of the carbonate is detected to be n, the first pump body or the third pump body is controlled to stop running, so that the solution stored temporarily in the first temporary storage structure enters the electrolysis device for the electrolysis.

It should be noted that the terms used herein are only for the purpose of describing specific embodiments and are not intended to limit the exemplary embodiments according to the present application. As used herein, unless otherwise explicitly stated in the context, the singular forms are also intended to include the plural forms. In addition, it should also be understood that, when the terms "contain" and/or "include" are used in this specification, it means that there are a feature, a step, an operation, a device, a component, and/or the combinations thereof.

It should be noted that the terms "first", "second", etc. in the specification and claims of the present application, as well as in the accompanying drawings, are used to distinguish similar objects and do not necessarily used to describe a specific order or sequence. It should be understood that the data used in this way may be interchanged in appropriate circumstances, so that the embodiments of the present application described herein can be implemented in an order other than those illustrated or described herein.

The above are only preferred embodiments of the present application and are not intended to limit the present application. For a person skilled in the art, there are various modifications and changes in the present application.

## Claims

1. A method for capturing carbon dioxide, comprising:
spraying an alkaline solution through a first spray structure, so that the alkaline solution flowing out through the first spray structure chemically reacts with carbon dioxide gas in gas to absorb the carbon dioxide gas;
temporarily storing a solution, obtained after the alkaline solution chemically reacts with the carbon dioxide gas, in a first temporary storage structure, and making the solution stored temporarily in the first temporary storage structure flow out through the first spray structure;
detecting a concentration of hydroxide and a concentration of carbonate of the solution in the first temporary storage structure in real time, and supplementing one of an alkaline solution and water into the first temporary storage structure according to the concentration of the hydroxide and the concentration of the carbonate; and
during a process of detecting the concentration of the hydroxide and the concentration of the carbonate of the solution in the first temporary storage structure in real time, in a case that the concentration of the hydroxide is detected to be less than or equal to m and the concentration of the carbonate is detected to be n, controlling a first pump body disposed on a first pipeline for pumping the solution entering the first temporary storage structure into the first spray structure to stop running, so that the solution stored temporarily in the first temporary storage structure enters an electrolysis device located downstream of the first temporary storage structure for an electrolysis.

2. The method for capturing the carbon dioxide according to claim 1, wherein a method for making the solution stored temporarily in the first temporary storage structure flow out through the first spray structure comprises:
starting the first pump body, to pump the solution stored temporarily in the first temporary storage structure into the first spray structure via a pipeline through the first pump body.

3. The method for capturing the carbon dioxide according to claim 1 or 2, wherein a method for supplementing one of an alkaline solution and water into the first temporary storage structure according to the concentration of the hydroxide and the concentration of the carbonate comprises:
in a case that the concentration of the hydroxide is detected to be less than m and the concentration of the carbonate is detected to be less than n, supplementing the alkaline solution into the first temporary storage structure; and
in a case that the concentration of the hydroxide is detected to be less than or equal to m and the concentration of the carbonate is detected to be greater than n, supplementing the water into the first temporary storage structure.

4. The method for capturing the carbon dioxide according to claim 1, wherein a method for detecting a concentration of hydroxide of the solution in the first temporary storage structure in real time comprises:
feeding the solution into a potentiometric titrator, dripping a standard acid with calibrated H+ concentration into the solution, and during a process of titration, continuously stirring the solution added with the standard acid and recording a first-order differential curve of solution potential with respect to a volume of the standard acid added into the solution, until the first-order differential curve of the solution potential reaches a first peak value, and calculating the concentration of the hydroxide of the solution by using the volume of the standard acid consumed at this time.

5. The method for capturing the carbon dioxide according to claim 1, wherein a method for detecting a concentration of carbonate of the solution in the first temporary storage structure in real time comprises:
feeding the solution into a potentiometric titrator, dripping a standard acid with calibrated H+ concentration into the solution, and during a process of titration, continuously stirring the solution added with the standard acid and recording a first-order differential curve of solution potential with respect to a volume of the standard acid added into the solution, until the first-order differential curve of the solution potential reaches a first peak value, recording the volume of the standard acid consumed at this time as V1; continuing to drip the standard acid with the calibrated H+ concentration into the solution, and during a process of the titration, continuing to stir the solution added with the standard acid and recording a first-order differential curve of solution potential with respect to a volume of the standard acid added into the solution, until the first-order differential curve of the solution potential reaches a second peak value, recording the volume of the standard acid consumed at this time as V2; and calculating the concentration of the carbonate of the solution by using a difference between V2 and V1.

6. The method for capturing the carbon dioxide according to claim 1, wherein a value of m is greater than or equal to 0.1 mol/L and less than or equal to 5 mol/L; and/ or a value of n is greater than or equal to 1 mol/L and less than or equal to 6 mol/L; and
preferably, a value of m is greater than or equal to 0.3 mol/L and less than or equal to 2 mol/L; and/or a value of n is greater than or equal to 2 mol/L and less than or equal to 5.5 mol/L.

7. The method for capturing the carbon dioxide according to claim 1, wherein during a process where the solution stored temporarily in the first temporary storage structure enters the electrolysis device located downstream of the first temporary storage structure for the electrolysis, the method for capturing the carbon dioxide further comprises:
regulating electric charge applied to the electrolysis device, to control a molar yield ratio of carbon dioxide gas to hydrogen in the electrolysis device over unit time and/or a yield of carbon dioxide gas and hydrogen in the electrolysis device over unit time;
preferably, a method for regulating electric charge applied to the electrolysis device comprises:
obtaining a preset value Q of the electric charge applied to the electrolysis device in a case that the molar yield ratio of the carbon dioxide gas to the hydrogen is 1, and increasing nQ on a basis of the preset value Q of the electric charge, to adjust the molar yield ratio of the carbon dioxide gas to the hydrogen, where n is equal to 1, 2, 3, ... , N (N≤ n); and
preferably, during a process for regulating a molar yield ratio of carbon dioxide gas to hydrogen, the method for capturing the carbon dioxide further comprises:
detecting a content of an electrolyte in the electrolysis device in real time, and in a case that the content of the electrolyte is less than a preset value, adding an electrolyte to the electrolysis device; and the electrolyte is one of alkali metal sulfate, alkali metal nitrate and alkali metal phosphate.

8. The method for capturing the carbon dioxide according to claim 1, wherein a method for temporarily storing a solution, obtained after the alkaline solution chemically reacts with the carbon dioxide gas, in a first temporary storage structure comprises:
providing at least two first temporary storage structures for switching operation, and selectively and temporarily storing the solution, obtained after the alkaline solution chemically reacts with the carbon dioxide gas, in each of the at least two first temporary storage structures; and in a case that a concentration of carbonate in one first temporary storage structure reaches a preset concentration value, deactivating the one first temporary storage structure, and enabling a remaining first temporary storage structure.

9. A gas absorption system, configured to absorb carbon dioxide gas in environment and using the method for capturing the carbon dioxide according to any one of claim 1 to claim 8, the gas absorption system comprising:
a housing (10) provided with an intake port (11) and an exhaust port (12), the intake port (11) being in communication with the exhaust port (12), wherein the exhaust port (12) is located above the intake port (11); or in a horizontal direction, the intake port (11) and the exhaust port (12) are disposed opposite to each other;
a gas pretreatment device (20) disposed inside the housing (10) and located at the intake port (11) for filtering impurities in gas entering the intake port (11); and
a gas absorption assembly (30) disposed inside the housing (10) and located downstream of the gas pretreatment device (20), the gas absorption assembly (30) comprising a first liquid supply device and a first spray structure (31), the first liquid supply device being in communication with the first spray structure (31) to provide an alkaline solution, and the alkaline solution flowing out through the first spray structure (31) chemically reacting with carbon dioxide gas in the gas to absorb the carbon dioxide gas,
wherein the gas absorption assembly (30) further comprises:
a first filler (32) disposed opposite to the exhaust port (12), the first filler (32) being located below the first spray structure (31);
a first water collector (33) located above the first spray structure (31);
a first temporary storage structure (34) located below the first filler (32) for temporarily storing a solution obtained after the alkaline solution chemically reacts with the carbon dioxide gas;
a first pipeline (35), an end of the first pipeline (35) being in communication with the first temporary storage structure (34), and another end of the first pipeline (35) being in communication with the first spray structure (31);
a first pump body (36) disposed on the first pipeline (35) for pumping the solution entering the first temporary storage structure (34) into the first spray structure (31);
a gas delivery device (40) disposed at at least one of the exhaust port (12) and the intake port (11);
a first detection device disposed inside the first temporary storage structure (34) for detecting a concentration of carbonate of a solution; and in a case that a detection value of the first detection device reaches a first preset concentration value, the gas delivery device (40) is configured to be controlled to stop running; and
a second detection device disposed inside the first temporary storage structure (34) for detecting a concentration of hydroxide of a solution; and in a case that a detection value of the second detection device is less than a second preset concentration value, the first pump body (36) is configured to be controlled to start,
wherein the gas absorption system further comprises an electrolysis device, the electrolysis device is located downstream of the first temporary storage structure (34), and the electrolysis device is configured to electrolyze a carbonic acid solution discharged through the first temporary storage structure (34), so that potassium hydroxide and hydrogen are generated at a cathode of the electrolysis device, and gas obtained by mixing oxygen and carbon dioxide is generated at an anode of the electrolysis device; and the potassium hydroxide is used for absorbing carbon dioxide of the gas absorption system.

10. The gas absorption system according to claim 9, wherein the gas pretreatment device (20) comprises:
a second filler (21) disposed opposite to the intake port (11);
a second liquid supply device;
a second spray structure (22) located above the second filler (21), the second liquid supply device being in communication with the second spray structure (22);
a second temporary storage structure (24) located below the second filler (21) for temporarily storing liquid flowing out through the second filler (21);
a second pipeline (25), an end of the second pipeline (25) being in communication with the second spray structure (22), and another end of the second pipeline (25) being in communication with the second temporary storage structure (24); and
a second pump body (26) disposed on the second pipeline (25) for pumping the liquid entering the second temporary storage structure (24) into the second spray structure (22);
preferably, the second temporary storage structure (24) comprises:
a first temporary storage body; and
a first baffle plate disposed inside the first temporary storage body for dividing an inner cavity of the first temporary storage body into a first sub-accommodating cavity and a second sub-accommodating cavity, the first sub-accommodating chamber being located below the second filler (21), and the second sub-accommodating cavity being in communication with the second pipeline (25), wherein the first baffle plate is provided with an overflow hole, and the first sub-accommodating cavity is in communication with the second sub-accommodating cavity through the overflow hole; or an overflow portion is disposed between the first baffle plate and the first temporary storage body, and the first sub-accommodating cavity is in communication with the second sub-accommodating cavity through the overflow portion.

11. The gas absorption system according to claim 9, wherein the housing (10) is provided with an accommodating cavity (13), the intake port (11) is in communication with the exhaust port (12) through the accommodating cavity (13), and the gas absorption assembly (30) is located inside the accommodation cavity (13), wherein there is one intake port (11), and there is one gas pretreatment device (20); or there are a plurality of intake ports (11), the plurality of intake ports (11) are disposed around the accommodating cavity (13), there are a plurality of gas pretreatment devices (20), and the plurality of gas pretreatment devices (20) and the plurality of intake ports (11) are in a one-to-one correspondence.

## Patentansprüche

1. Ein Verfahren zum Abscheiden von Kohlendioxid, beinhaltend:
Sprühen einer alkalischen Lösung durch eine erste Sprühstruktur, sodass die alkalische Lösung, die durch die erste Sprühstruktur ausströmt, chemisch mit Kohlendioxidgas in Gas reagiert, um das Kohlendioxidgas zu absorbieren;
vorübergehendes Speichern einer Lösung, die erhalten wird, nachdem die alkalische Lösung chemisch mit dem Kohlendioxidgas reagiert, in einer ersten Struktur zur vorübergehenden Speicherung und Veranlassen, dass die vorübergehend in der ersten Struktur zur vorübergehenden Speicherung gespeicherte Lösung durch die erste Sprühstruktur ausströmt;
Erfassen einer Konzentration von Hydroxid und einer Konzentration von Carbonat der Lösung in der ersten Struktur zur vorübergehenden Speicherung in Echtzeit und
Beigeben von einem von einer alkalischen Lösung und Wasser in die erste Struktur zur vorübergehenden Speicherung gemäß der Konzentration des Hydroxids und der Konzentration des Carbonats; und
während eines Prozesses des Erfassens der Konzentration des Hydroxids und der Konzentration des Carbonats der Lösung in der ersten Struktur zur vorübergehenden Speicherung in Echtzeit, in einem Fall, dass erfasst wird, dass die Konzentration des Hydroxids kleiner als oder gleich m ist, und erfasst wird, dass die Konzentration des Carbonats n ist, Steuern eines ersten Pumpenkörpers, der einer ersten Rohrleitung zum Pumpen der in die erste Struktur zur vorübergehenden Speicherung eintretenden Lösung in die erste Sprühstruktur an eingerichtet ist, anzuhalten, sodass die vorübergehend in der ersten Struktur zur vorübergehenden Speicherung gespeicherte Lösung für eine Elektrolyse in eine Elektrolysevorrichtung eintritt, die sich stromabwärts von der ersten Struktur zur vorübergehenden Speicherung befindet.

2. Verfahren zum Abscheiden des Kohlendioxids gemäß Anspruch 1, wobei ein Verfahren zum Veranlassen, dass die vorübergehend in der ersten Struktur zur vorübergehenden Speicherung gespeicherte Lösung durch die erste Sprühstruktur ausströmt, Folgendes beinhaltet:
Starten des ersten Pumpenkörpers, um die vorübergehend in der ersten Struktur zur vorübergehenden Speicherung gespeicherte Lösung über eine Rohrleitung durch den ersten Pumpenkörper in die erste Sprühstruktur zu pumpen.

3. Verfahren zum Abscheiden des Kohlendioxids gemäß Anspruch 1 oder 2, wobei ein Verfahren zum Beigeben von einem von einer alkalischen Lösung und Wasser in die erste Struktur zur vorübergehenden Speicherung gemäß der Konzentration des Hydroxids und der Konzentration des Carbonats Folgendes beinhaltet:
in einem Fall, dass erfasst wird, dass die Konzentration des Hydroxids kleiner als m ist, und dass erfasst wird, dass die Konzentration des Carbonats kleiner als n ist, Beigeben der alkalischen Lösung in die erste Struktur zur vorübergehenden Speicherung; und
in einem Fall, dass erfasst wird, dass die Konzentration des Hydroxids kleiner als oder gleich m ist, und dass erfasst wird, dass die Konzentration des Carbonats größer als n ist, Beigeben des Wassers in die erste Struktur zur vorübergehenden Speicherung.

4. Verfahren zum Abscheiden des Kohlendioxids gemäß Anspruch 1, wobei ein Verfahren zum Erfassen einer Konzentration von Hydroxid der Lösung in der ersten Struktur zur vorübergehenden Speicherung in Echtzeit Folgendes beinhaltet:
Einspeisen der Lösung in einen potentiometrischen Titrator, Tropfen einer Standardsäure mit kalibrierter H+-Konzentration in die Lösung und während eines Prozesses der Titration kontinuierliches Rühren der Lösung mit der hinzugefügten Standardsäure und Aufzeichnen einer Kurve eines Differenzials ersten Grades des Lösungspotenzials bezogen auf ein zu der Lösung hinzugefügtes Volumen der Standardsäure, bis die Kurve eines Differenzials erster Ordnung des Lösungspotenzials einen ersten Spitzenwert erreicht, und Berechnen der Konzentration des Hydroxids der Lösung unter Verwendung des Volumens der zu dieser Zeit verbrauchten Standardsäure.

5. Verfahren zum Abscheiden des Kohlendioxids gemäß Anspruch 1, wobei ein Verfahren zum Erfassen einer Konzentration von Carbonat der Lösung in der ersten Struktur zur vorübergehenden Speicherung in Echtzeit Folgendes beinhaltet:
Einspeisen der Lösung in einen potentiometrischen Titrator, Tropfen einer Standardsäure mit kalibrierter H+-Konzentration in die Lösung und während eines Prozesses der Titration kontinuierliches Rühren der Lösung mit der hinzugefügten Standardsäure und Aufzeichnen einer Kurve eines Differenzials ersten Grades des Lösungspotenzials bezogen auf ein zu der Lösung hinzugefügtes Volumen der Standardsäure, bis die Kurve eines Differenzials erster Ordnung des Lösungspotenzials einen ersten Spitzenwert erreicht, und Aufzeichnen des Volumens der zu dieser Zeit verbrauchten Standardsäure als V1; Fortfahren, die Standardsäure mit der kalibrierten H+-Konzentration in die Lösung zu tropfen, und während eines Prozesses der Titration Fortfahren, die Lösung mit der hinzugefügten Standardsäure zu rühren, und
Aufzeichnen einer Kurve eines Differenzials ersten Grades des Lösungspotenzials bezogen auf ein zu der Lösung hinzugefügtes Volumen der Standardsäure, bis die Kurve eines Differenzials erster Ordnung des Lösungspotenzials einen zweiten Spitzenwert erreicht, und Aufzeichnen des Volumens der zu dieser Zeit verbrauchten Standardsäure als V2; und Berechnen der Konzentration des Carbonats der Lösung unter Verwendung einer Differenz zwischen V2 und V1.

6. Verfahren zum Abscheiden des Kohlendioxids gemäß Anspruch 1, wobei ein Wert von m größer als oder gleich 0,1 mol/l und kleiner als oder gleich 5 mol/l ist; und/oder ein Wert von n größer als oder gleich 1 mol/l und kleiner als oder gleich 6 mol/l ist; und vorzugsweise ein Wert von m größer als oder gleich 0,3 mol/l und kleiner als oder gleich 2 mol/l ist; und/oder ein Wert von n größer als oder gleich 2 mol/l und kleiner als oder gleich 5,5 mol/l ist.

7. Verfahren zum Abscheiden des Kohlendioxids gemäß Anspruch 1, wobei während eines Prozesses, in dem die vorübergehend in der ersten Struktur zur vorübergehenden Speicherung gespeicherte Lösung zur Elektrolyse in die stromabwärts von der ersten Struktur zur vorübergehenden Speicherung befindliche Elektrolysevorrichtung eintritt, das Verfahren zum Abscheiden des Kohlendioxids ferner Folgendes beinhaltet:
Regeln einer an die Elektrolysevorrichtung angelegten elektrischen Ladung, um ein Verhältnis der molaren Ausbeute von Kohlendioxidgas zu Wasserstoff in der Elektrolysevorrichtung über eine Zeiteinheit und/oder eine Ausbeute von Kohlendioxidgas und Wasserstoff in der Elektrolysevorrichtung über eine Zeiteinheit zu steuern;
ein Verfahren zum Regeln einer an die Elektrolysevorrichtung angelegten elektrischen Ladung vorzugsweise Folgendes beinhaltet:
Erhalten eines voreingestellten Wertes Q der an die Elektrolysevorrichtung angelegten elektrischen Ladung in einem Fall, dass das Verhältnis der molaren Ausbeute des Kohlendioxidgases zu dem Wasserstoff 1 beträgt, und Erhöhen von nQ auf einer Basis des voreingestellten Wertes Q der elektrischen Ladung, um das Verhältnis der molaren Ausbeute des Kohlendioxidgases zu dem Wasserstoff anzupassen, wobei n gleich 1, 2, 3, ..., N ist (N ≤ n); und
das Verfahren zum Abscheiden des Kohlendioxids während eines Prozesses zum Regeln eines Verhältnisses der molaren Ausbeute von Kohlendioxidgas zu Wasserstoff vorzugsweise ferner Folgendes beinhaltet:
Erfassen eines Inhalts an einem Elektrolyten in der Elektrolysevorrichtung in Echtzeit und in einem Fall, dass der Inhalt an dem Elektrolyten niedriger als ein voreingestellter Wert ist, Hinzufügen eines Elektrolyten zu der Elektrolysevorrichtung; und der Elektrolyt eines von einem Alkalimetallsulfat, Alkalimetallnitrat und Alkalimetallphosphat ist.

8. Verfahren zum Abscheiden des Kohlendioxids gemäß Anspruch 1, wobei ein Verfahren zum vorübergehenden Speichern einer Lösung, die erhalten wird, nachdem die alkalische Lösung chemisch mit dem Kohlendioxidgas reagiert, in einer ersten Struktur zur vorübergehenden Speicherung Folgendes beinhaltet:
Bereitstellen von mindestens zwei ersten Strukturen zur vorübergehenden Speicherung für wechselnden Betrieb und selektives und vorübergehendes Speichern der Lösung,
die erhalten wird, nachdem die alkalische Lösung chemisch mit dem Kohlendioxidgas reagiert, in jedem der mindestens zwei ersten Strukturen zur vorübergehenden Speicherung; und in einem Fall, dass eine Konzentration von Carbonat in einer ersten Struktur zur vorübergehenden Speicherung einen voreingestellten Konzentrationswert erreicht, Deaktivieren der einen ersten Struktur zur vorübergehenden Speicherung und Aktivieren einer verbleibenden ersten Struktur zur vorübergehenden Speicherung.

9. Ein Gasabsorptionssystem, das dazu konfiguriert ist, Kohlendioxidgas in der Umgebung zu absorbieren, und das Verfahren zum Abscheiden des Kohlendioxids gemäß einem von Anspruch 1 bis Anspruch 8 verwendet, wobei das Gasabsorptionssystem Folgendes beinhaltet:
ein Gehäuse (10), das mit einer Ansaugöffnung (11) und einer Auslassöffnung (12) versehen ist, wobei die Ansaugöffnung (11) in Kommunikation mit der Auslassöffnung (12) steht, wobei sich die Auslassöffnung (12) über der Ansaugöffnung (11) befindet; oder, in einer horizontalen Richtung, die Ansaugöffnung (11) und die Auslassöffnung (12) einander entgegengesetzt eingerichtet sind;
eine Gasvorbehandlungsvorrichtung (20), die im Inneren des Gehäuses (10) eingerichtet ist und sich an der Ansaugöffnung (11) befindet, zum Filtern von Verunreinigungen in Gas, das in die Ansaugöffnung (11) eintritt; und
eine Gasabsorptionsanordnung (30), die im Inneren des Gehäuses (10) eingerichtet ist und sich stromabwärts von der Gasvorbehandlungsvorrichtung (20) befindet, wobei die Gasvorbehandlungsvorrichtung (30) eine erste Flüssigkeitszufuhrvorrichtung und eine erste Sprühstruktur (31) beinhaltet, wobei die erste Flüssigkeitszufuhrvorrichtung in Kommunikation mit der ersten Sprühstruktur (31) steht, um eine alkalische Lösung bereitzustellen, und die alkalische Lösung, die durch die erste Sprühstruktur (31) ausströmt, chemisch mit Kohlendioxidgas in dem Gas reagiert, sodass sie das Kohlendioxidgas absorbiert,
wobei die Gasabsorptionsanordnung (30) ferner Folgendes beinhaltet:
einen ersten Füller (32), der gegenüber der Auslassöffnung (12) eingerichtet ist, wobei der erste Füller (32) sich unter der ersten Sprühstruktur (31) befindet;
einen ersten Wasserkollektor (33), der sich über der ersten Sprühstruktur (31) befindet; eine erste Struktur (34) zur vorübergehenden Speicherung, die sich unter dem ersten Füller (32) befindet, zur vorübergehenden Speicherung einer Lösung, die erhalten wird, nachdem die alkalische Lösung chemisch mit dem Kohlendioxidgas reagiert;
eine erste Rohrleitung (35), wobei ein Ende der ersten Rohrleitung (35) in Kommunikation mit der ersten Struktur (34) zur vorübergehenden Speicherung steht und ein anderes Ende der ersten Rohrleitung (35) in Kommunikation mit der ersten Sprühstruktur (31) steht;
einen ersten Pumpenkörper (36), der an der ersten Rohrleitung (35) eingerichtet ist, zum Pumpen der in die erste Struktur (34) zur vorübergehenden Speicherung eintretenden Lösung in die erste Sprühstruktur (31);
eine Gaszuleitungsvorrichtung (40), die an mindestens einer von der Auslassöffnung (12) und der Ansaugöffnung (11) eingerichtet ist;
eine erste Erfassungsvorrichtung, die im Inneren der ersten Struktur (34) zur vorübergehenden Speicherung eingerichtet ist, zum Erfassen einer Konzentration von Carbonat einer Lösung; und in einem Fall, dass ein Erfassungswert der ersten Erfassungsvorrichtung einen ersten voreingestellten Konzentrationswert erreicht, die Gaszuleitungsvorrichtung (40) dazu konfiguriert ist, gesteuert zu werden, sodass sie anhält; und
eine zweite Erfassungsvorrichtung, die im Inneren der ersten Struktur (34) zur vorübergehenden Speicherung eingerichtet ist, zum Erfassen einer Konzentration von Hydroxid einer Lösung; und in einem Fall, dass ein Erfassungswert der zweiten Erfassungsvorrichtung kleiner als ein zweiter voreingestellter Konzentrationswert ist, der erste Pumpenkörper (36) dazu konfiguriert ist, gesteuert zu werden, sodass er startet,
wobei das Gasabsorptionssystem ferner eine Elektrolysevorrichtung beinhaltet, die Elektrolysevorrichtung sich stromabwärts von der ersten Struktur (34) zur vorübergehenden Speicherung befindet und die Elektrolysevorrichtung dazu konfiguriert ist, eine Kohlensäurelösung zu elektrolysieren, die durch die erste Struktur (34) zur vorübergehenden Speicherung ausgestoßen wird, sodass an einer Kathode der Elektrolysevorrichtung Kaliumhydroxid und Wasserstoff erzeugt werden und an einer Anode der Elektrolysevorrichtung Gas erzeugt wird, das durch Mischen von Sauerstoff und Kohlendioxid erhalten wird; und das Kaliumhydroxid zum Absorbieren von Kohlendioxid des Gasabsorptionssystems verwendet wird.

10. Gasabsorptionssystem gemäß Anspruch 9, wobei die Gasvorbehandlungsvorrichtung (20) Folgendes beinhaltet:
einen zweiten Füller (21), der gegenüber der Ansaugöffnung (11) eingerichtet ist;
eine zweite Flüssigkeitszufuhrvorrichtung;
eine zweite Sprühstruktur (22), die sich über dem zweiten Füller (21) befindet, wobei die zweite Flüssigkeitszufuhrvorrichtung in Kommunikation mit der zweiten Sprühstruktur (22) steht;
eine zweite Struktur (24) zur vorübergehenden Speicherung, die sich unter dem zweiten Füller (21) befindet, zur vorübergehenden Speicherung von Flüssigkeit, die durch den zweiten Füller (21) ausströmt;
eine zweite Rohrleitung (25), wobei ein Ende der zweiten Rohrleitung (25) in Kommunikation mit der zweiten Sprühstruktur (22) steht und ein anderes Ende der zweiten Rohrleitung (25) in Kommunikation mit der zweiten Struktur (24) zur vorübergehenden Speicherung steht; und
einen zweiten Pumpenkörper (26), der an der zweiten Rohrleitung (25) eingerichtet ist, zum Pumpen der in die zweite Struktur (24) zur vorübergehenden Speicherung eintretenden Flüssigkeit in die zweite Sprühstruktur (22);
die zweite Struktur (24) zur vorübergehenden Speicherung vorzugsweise Folgendes beinhaltet:
einen ersten Körper zur vorübergehenden Speicherung; und
eine erste Prallplatte, die im Inneren des ersten Körpers zur vorübergehenden Speicherung eingerichtet ist, zum Teilen eines Innenhohlraums des ersten Körpers zur vorübergehenden Speicherung in einen ersten Teilaufnahmehohlraum und einen zweiten Teilaufnahmehohlraum, wobei sich die erste Teilaufnahmekammer unter dem zweiten Füller (21) befindet und der zweite Teilaufnahmehohlraum in Kommunikation mit der zweiten Rohrleitung (25) steht, wobei die erste Prallplatte mit einem Überlaufloch versehen ist und der erste Teilaufnahmehohlraum durch das Überlaufloch in Kommunikation mit dem zweiten Teilaufnahmehohlraum steht; oder ein Überlaufabschnitt zwischen der ersten Prallplatte und dem ersten Körper zur vorübergehenden Speicherung eingerichtet ist und der erste Teilaufnahmehohlraum durch den Überlaufabschnitt in Kommunikation mit dem zweiten Teilaufnahmehohlraum steht.

11. Gasabsorptionssystem gemäß Anspruch 9, wobei das Gehäuse (10) mit einem Aufnahmehohlraum (13) versehen ist, die Ansaugöffnung (11) durch den Aufnahmehohlraum (13) in Kommunikation mit der Auslassöffnung (12) steht und die Gasabsorptionsanordnung (30) sich im Inneren des Aufnahmehohlraums (13) befindet, wobei es genau eine Ansaugöffnung (11) gibt und es genau eine Gasvorbehandlungsvorrichtung (20) gibt; oder es eine Vielzahl von Ansaugöffnungen (11) gibt, wobei die Vielzahl von Ansaugöffnungen (11) um den Aufnahmehohlraum (13) herum angeordnet ist, es eine Vielzahl von Gasvorbehandlungsvorrichtungen (20) gibt und die Vielzahl von Gasvorbehandlungsvorrichtungen (20) und die Vielzahl von Ansaugöffnungen (11) in einer Eins-zu-eins-Entsprechung vorliegen.

## Revendications

1. Un procédé pour capturer du dioxyde de carbone, comprenant :
le fait de pulvériser une solution alcaline à travers une première structure de pulvérisation, de sorte que la solution alcaline sortant en s'écoulant à travers la première structure de pulvérisation réagit chimiquement avec du dioxyde de carbone gazeux dans du gaz pour absorber le dioxyde de carbone gazeux ;
le fait de stocker temporairement une solution, obtenue après que la solution alcaline a réagi chimiquement avec le dioxyde de carbone gazeux, dans une première structure de stockage temporaire, et d'amener la solution stockée temporairement dans la première structure de stockage temporaire à sortir en s'écoulant à travers la première structure de pulvérisation ;
le fait de détecter une concentration d'hydroxyde et une concentration de carbonate de la solution dans la première structure de stockage temporaire en temps réel, et
d'apporter en complément un élément parmi une solution alcaline et de l'eau dans la première structure de stockage temporaire selon la concentration de l'hydroxyde et la concentration du carbonate ; et
au cours d'un processus de détection de la concentration de l'hydroxyde et de la concentration du carbonate de la solution dans la première structure de stockage temporaire en temps réel, dans un cas où la concentration de l'hydroxyde est détectée comme étant inférieure ou égale à m et la concentration du carbonate est détectée comme étant n, le fait de contrôler un premier corps formant pompe disposé sur un premier conduit pour le pompage de la solution entrant dans la première structure de stockage temporaire jusque dans la première structure de pulvérisation afin qu'il s'arrête de fonctionner, de sorte que la solution stockée temporairement dans la première structure de stockage temporaire entre dans un dispositif d'électrolyse situé en aval de la première structure de stockage temporaire pour une électrolyse.

2. Le procédé pour capturer le dioxyde de carbone selon la revendication 1, dans lequel un procédé pour amener la solution stockée temporairement dans la première structure de stockage temporaire à sortir en s'écoulant à travers la première structure de pulvérisation comprend :
le fait de démarrer le premier corps formant pompe, pour pomper la solution stockée temporairement dans la première structure de stockage temporaire jusque dans la première structure de pulvérisation via un conduit à travers le premier corps formant pompe.

3. Le procédé pour capturer le dioxyde de carbone selon la revendication 1 ou la revendication 2, dans lequel un procédé pour apporter en complément un élément parmi une solution alcaline et de l'eau dans la première structure de stockage temporaire selon la concentration de l'hydroxyde et la concentration du carbonate comprend :
dans un cas où la concentration de l'hydroxyde est détectée comme étant inférieure à m et la concentration du carbonate est détectée comme étant inférieure à n, le fait d'apporter en complément la solution alcaline dans la première structure de stockage temporaire ; et
dans un cas où la concentration de l'hydroxyde est détectée comme étant inférieure ou égale à m et la concentration du carbonate est détectée comme étant supérieure à n, le fait d'apporter en complément l'eau dans la première structure de stockage temporaire.

4. Le procédé pour capturer le dioxyde de carbone selon la revendication 1, dans lequel un procédé pour détecter une concentration d'hydroxyde de la solution dans la première structure de stockage temporaire en temps réel comprend :
le fait d'amener la solution jusque dans un titrateur potentiométrique, de faire tomber goutte à goutte un acide titré avec une concentration H+ calibrée dans la solution, et au cours d'un processus de titrage, le fait d'agiter en continu la solution à laquelle a été ajouté l'acide titré et d'enregistrer une courbe différentielle de premier ordre de potentiel de solution par rapport à un volume de l'acide titré ajouté dans la solution, jusqu'à ce que la courbe différentielle de premier ordre du potentiel de solution atteigne une première valeur de crête, et de calculer la concentration de l'hydroxyde de la solution en utilisant le volume de l'acide titré consommé à ce moment.

5. Le procédé pour capturer le dioxyde de carbone selon la revendication 1, dans lequel un procédé pour détecter une concentration de carbonate de la solution dans la première structure de stockage temporaire en temps réel comprend :
le fait d'amener la solution jusque dans un titrateur potentiométrique, de faire tomber goutte à goutte un acide titré avec une concentration H+ calibrée dans la solution, et au cours d'un processus de titrage, le fait d'agiter en continu la solution à laquelle a été ajouté l'acide titré et d'enregistrer une courbe différentielle de premier ordre de potentiel de solution par rapport à un volume de l'acide titré ajouté dans la solution, jusqu'à ce que la courbe différentielle de premier ordre du potentiel de solution atteigne une première valeur de crête, d'enregistrer le volume de l'acide titré consommé à ce moment comme V1 ; de continuer à faire tomber goutte à goutte l'acide titré avec la concentration H+ calibrée dans la solution, et au cours d'un processus du titrage, le fait de continuer à agiter la solution à laquelle a été ajouté l'acide titré et d'enregistrer une courbe différentielle de premier ordre de potentiel de solution par rapport à un volume de l'acide titré ajouté dans la solution, jusqu'à ce que la courbe différentielle de premier ordre du potentiel de solution atteigne une deuxième valeur de crête, d'enregistrer le volume de l'acide titré consommé à ce moment comme V2 ; et de calculer la concentration du carbonate de la solution en utilisant une différence entre V2 et V1.

6. Le procédé pour capturer le dioxyde de carbone selon la revendication 1, dans lequel une valeur de m est supérieure ou égale à 0,1 mol/L et inférieure ou égale à 5 mol/L ; et/ou une valeur de n est supérieure ou égale à 1 mol/L et inférieure ou égale à 6 mol/L ; et
de préférence, une valeur de m est supérieure ou égale à 0,3 mol/L et inférieure ou égale à 2 mol/L ; et/ou une valeur de n est supérieure ou égale à 2 mol/L et inférieure ou égale à 5,5 mol/L.

7. Le procédé pour capturer le dioxyde de carbone selon la revendication 1, au cours d'un processus où la solution stockée temporairement dans la première structure de stockage temporaire entre dans le dispositif d'électrolyse situé en aval de la première structure de stockage temporaire pour l'électrolyse, le procédé pour capturer le dioxyde de carbone comprenant en outre :
le fait de réguler une charge électrique appliquée au dispositif d'électrolyse, pour contrôler un rapport de rendement molaire du dioxyde de carbone gazeux à l'hydrogène dans le dispositif d'électrolyse sur une unité de temps et/ou un rendement du dioxyde de carbone gazeux et de l'hydrogène dans le dispositif d'électrolyse sur une unité de temps ;
de préférence, un procédé pour réguler une charge électrique appliquée au dispositif d'électrolyse comprend :
le fait d'obtenir une valeur préétablie Q de la charge électrique appliquée au dispositif d'électrolyse dans un cas où le rapport de rendement molaire du dioxyde de carbone gazeux à l'hydrogène est de 1, et d'augmenter nQ sur une base de la valeur préétablie Q de la charge électrique, pour régler le rapport de rendement molaire du dioxyde de carbone gazeux à l'hydrogène, où n est égal à 1, 2, 3, ..., N (N ≤ n) ; et
de préférence, au cours d'un processus pour réguler un rapport de rendement molaire du dioxyde de carbone gazeux à l'hydrogène, le procédé pour capturer le dioxyde de carbone comprend en outre :
le fait de détecter une teneur en électrolyte dans le dispositif d'électrolyse en temps réel, et dans un cas où la teneur en électrolyte est inférieure à une valeur préétablie, le fait d'ajouter un électrolyte au dispositif d'électrolyse ; et l'électrolyte est un élément parmi un sulfate de métal alcalin, un nitrate de métal alcalin et un phosphate de métal alcalin.

8. Le procédé pour capturer le dioxyde de carbone selon la revendication 1, dans lequel un procédé pour stocker temporairement une solution, obtenue après que la solution alcaline a réagi chimiquement avec le dioxyde de carbone gazeux, dans une première structure de stockage temporaire comprend :
le fait de fournir au moins deux premières structures de stockage temporaire pour changer d'opération, et de stocker sélectivement et temporairement la solution, obtenue après que la solution alcaline a réagi chimiquement avec le dioxyde de carbone gazeux, dans chacune des au moins deux premières structures de stockage temporaire ; et dans un cas où une concentration de carbonate dans une première structure de stockage temporaire atteint une valeur de concentration préétablie, le fait de désactiver la première structure de stockage temporaire, et d'activer une première structure de stockage temporaire restante.

9. Un système d'absorption de gaz, configuré pour absorber du dioxyde de carbone gazeux dans un environnement et utilisant le procédé pour capturer le dioxyde de carbone selon l'une quelconque de la revendication 1 à la revendication 8, le système d'absorption de gaz comprenant :
un boîtier (10) pourvu d'un orifice d'admission (11) et d'un orifice d'échappement (12), l'orifice d'admission (11) étant en communication avec l'orifice d'échappement (12),
l'orifice d'échappement (12) étant situé au-dessus de l'orifice d'admission (11) ; ou dans une direction horizontale, l'orifice d'admission (11) et l'orifice d'échappement (12) étant disposés à l'opposé l'un de l'autre ;
un dispositif de prétraitement de gaz (20) disposé à l'intérieur du boîtier (10) et situé au niveau de l'orifice d'admission (11) pour filtrer des impuretés dans du gaz entrant dans l'orifice d'admission (11) ; et
un ensemble d'absorption de gaz (30) disposé à l'intérieur du boîtier (10) et situé en aval du dispositif de prétraitement de gaz (20), l'ensemble d'absorption de gaz (30) comprenant un premier dispositif d'apport de liquide et une première structure de pulvérisation (31), le premier dispositif d'apport de liquide étant en communication avec la première structure de pulvérisation (31) pour fournir une solution alcaline, et la solution alcaline sortant en s'écoulant à travers la première structure de pulvérisation (31) réagissant chimiquement avec du dioxyde de carbone gazeux dans le gaz pour absorber le dioxyde de carbone gazeux,
dans lequel l'ensemble d'absorption de gaz (30) comprend en outre :
un premier matériau de remplissage (32) disposé à l'opposé de l'orifice d'échappement (12), le premier matériau de remplissage (32) étant situé en dessous de la première structure de pulvérisation (31) ;
un premier collecteur d'eau (33) situé au-dessus de la première structure de pulvérisation (31) ;
une première structure de stockage temporaire (34) située en dessous du premier matériau de remplissage (32) pour stocker temporairement une solution obtenue après que la solution alcaline a réagi chimiquement avec le dioxyde de carbone gazeux ;
un premier conduit (35), une extrémité du premier conduit (35) étant en communication avec la première structure de stockage temporaire (34), et une autre extrémité du premier conduit (35) étant en communication avec la première structure de pulvérisation (31) ;
un premier corps formant pompe (36) disposé sur le premier conduit (35) pour pomper la solution entrant dans la première structure de stockage temporaire (34) jusque dans la première structure de pulvérisation (31) ;
un dispositif de distribution de gaz (40) disposé au niveau d'au moins l'un de l'orifice d'échappement (12) et de l'orifice d'admission (11) ;
un premier dispositif de détection disposé à l'intérieur de la première structure de stockage temporaire (34) pour détecter une concentration de carbonate d'une solution ;
et dans un cas où une valeur de détection du premier dispositif de détection atteint une première valeur de concentration préétablie, le dispositif de distribution de gaz (40) est configuré pour être contrôlé afin qu'il s'arrête de fonctionner ; et
un deuxième dispositif de détection disposé à l'intérieur de la première structure de stockage temporaire (34) pour détecter une concentration d'hydroxyde d'une solution ;
et dans un cas où une valeur de détection du deuxième dispositif de détection est inférieure à une deuxième valeur de concentration préétablie, le premier corps formant pompe (36) est configuré pour être contrôlé afin qu'il démarre,
le système d'absorption de gaz comprenant en outre un dispositif d'électrolyse, le dispositif d'électrolyse est situé en aval de la première structure de stockage temporaire (34), et le dispositif d'électrolyse est configuré pour électrolyser une solution d'acide carbonique déversée à travers la première structure de stockage temporaire (34), de sorte que de l'hydroxyde de potassium et de l'hydrogène sont générés au niveau d'une cathode du dispositif d'électrolyse, et du gaz obtenu en mélangeant de l'oxygène et du dioxyde de carbone est généré au niveau d'une anode du dispositif d'électrolyse ; et
l'hydroxyde de potassium est utilisé pour absorber du dioxyde de carbone du système d'absorption de gaz.

10. Le système d'absorption de gaz selon la revendication 9, dans lequel le dispositif de prétraitement de gaz (20) comprend :
un deuxième matériau de remplissage (21) disposé à l'opposé de l'orifice d'admission (11) ;
un deuxième dispositif d'apport de liquide ;
une deuxième structure de pulvérisation (22) située au-dessus du deuxième matériau de remplissage (21), le deuxième dispositif d'apport de liquide étant en communication avec la deuxième structure de pulvérisation (22) ;
une deuxième structure de stockage temporaire (24) située en dessous du deuxième matériau de remplissage (21) pour stocker temporairement du liquide sortant en s'écoulant à travers le deuxième matériau de remplissage (21) ;
un deuxième conduit (25), une extrémité du deuxième conduit (25) étant en communication avec la deuxième structure de pulvérisation (22), et une autre extrémité du deuxième conduit (25) étant en communication avec la deuxième structure de stockage temporaire (24) ; et
un deuxième corps formant pompe (26) disposé sur le deuxième conduit (25) pour pomper le liquide entrant dans la deuxième structure de stockage temporaire (24) jusque dans la deuxième structure de pulvérisation (22) ;
de préférence, la deuxième structure de stockage temporaire (24) comprend :
un premier corps de stockage temporaire ; et
une première plaque déflectrice disposée à l'intérieur du premier corps de stockage temporaire pour diviser une cavité interne du premier corps de stockage temporaire en une première cavité de logement secondaire et une deuxième cavité de logement secondaire, la première chambre de logement secondaire étant située en dessous du deuxième matériau de remplissage (21), et la deuxième cavité de logement secondaire étant en communication avec le deuxième conduit (25), la première plaque déflectrice étant pourvue d'un trou de trop-plein, et la première cavité de logement secondaire étant en communication avec la deuxième cavité de logement secondaire par l'intermédiaire du trou de trop-plein ; ou une portion de trop-plein est disposée entre la première plaque déflectrice et le premier corps de stockage temporaire, et la première cavité de logement secondaire est en communication avec la deuxième cavité de logement secondaire par l'intermédiaire de la portion de trop-plein.

11. Le système d'absorption de gaz selon la revendication 9, dans lequel le boîtier (10) est pourvu d'une cavité de logement (13), l'orifice d'admission (11) est en communication avec l'orifice d'échappement (12) par l'intermédiaire de la cavité de logement (13), et l'ensemble d'absorption de gaz (30) est situé à l'intérieur de la cavité de logement (13), dans lequel il y a un orifice d'admission (11), et il y a un dispositif de prétraitement de gaz (20) ; ou il y a une pluralité d'orifices d'admission (11), la pluralité d'orifices d'admission (11) sont disposés autour de la cavité de logement (13), il y a une pluralité de dispositifs de prétraitement de gaz (20), et la pluralité de dispositifs de prétraitement de gaz (20) et la pluralité d'orifices d'admission (11) sont en correspondance biunivoque.
